# EUROPEAN PATENT SPECIFICATION

(11) **EP 2 734 580 B1**
(45) Date of publication and mention of the grant of the patent: **03.10.2018**
(21) Application number: 12815107.3
(22) Date of filing: 19.07.2012
(51) Int. Cl.: C08J 5/04, C08J 5/10, C08G 73/10, C08G 69/40, B82Y 30/00, C08K 7/06, C08K 9/00, C08J 3/20, C08K 3/04, C01B 32/05

(54) **NANOTUBE AND FINELY MILLED CARBON FIBER POLYMER COMPOSITE COMPOSITIONS AND METHODS OF MAKING**
NANORÖHRCHEN UND FEIN GEMAHLENE KOHLENSTOFFASER-POLYMERVERBUNDZUSAMMENSETZUNGEN SOWIE HERSTELLUNGSVERFAHREN
COMPOSITIONS À BASE DE NANOTUBES ET DE COMPOSÉS POLYMÈRES DE FIBRE DE CARBONE FINEMENT BROYÉE ET LEUR PROCÉDÉ DE FABRICATION

(30) Priority: 21.07.2011 US 201161510352 P
(43) Date of publication of application: 28.05.2014
(73) Proprietor: Entegris, Inc., Billerica, MA 01821 (US)
(72) Inventor: GALLOWAY, Jeffrey, A., Billerica, MA 01821 (US)
(74) Representative: Greaves Brewster LLP
(86) International application number: PCT/US2012/047445
(87) International publication number: WO 2013/013070

(56) References cited:
- WO-A1-2011/019408
- KR-A- 20090 097 031
- US-A1- 2005 186 378
- US-A1- 2010 003 438
- US-A1- 2010 267 883
- US-B2- 6 569 937
- US-B2- 6 998 434
- US-B2- 7 220 484
- LI J; ZHANG L Q: "Reinforcing effect of carbon nanotubes on PEEK composite filled with carbon fibre", MATERIALS SCIENCE AND TECHNOLOGY, vol. 27, no. 1, 1 January 2011 (2011-01-01), pages 252-256, XP002733681,

## Description

### RELATED APPLICATIONS

### FIELD OF THE INVENTION

The present invention relates generally to compositions comprising one or more polymers, carbon nanotubes and finely milled carbon fibers. In particular, in certain aspects, the present invention relates to compositions having a polymer and an amount of carbon nanotubes and an amount of finely milled carbon fibers dispersed within the polymer, the finely milled carbon fibers having an aspect ratio greater than 1 and less than about 5. Additionally, the present invention relates to methods of making the compositions. Furthermore, the invention relates to articles, such as containers or functional articles, formed from the compositions.

### BACKGROUND OF THE INVENTION

Technological developments impose increasing demands on material properties to achieve desired objectives for the resulting articles. Improved material capabilities can provide improved performance capabilities for corresponding articles and products that incorporate the improved materials. Composite materials have been found to be a way to combine desired properties of different compositions to obtain a material that benefits from the properties of the plurality of compositions.

Advanced products may require special handling approaches due to the sensitivity of the products to damage and degradation. In particular, some products, such as semi-conductor devices, silicon wafers and the like, can be damaged during transportation, and/or processing, for example, as a result of the products contacting each other. Consequently, specialized containers have been developed to transport these products. These specialized containers can be formed, for example, from molded thermoplastic materials, which have structure suitable for holding a plurality of products in a desired orientation within the container. The interior structure of these containers typically prevents the products from contacting each other, and thus helps reduce product damage that can occur during transportation of the products. Advanced products may also be sensitive to static discharge, especially electronic devices that become smaller and faster, which have an increased sensitivity and where the necessity for increased rates of electrostatic dissipation ("ESD") becomes vital.

Some articles have high electrical conductivities to appropriately function in their applications. Specifically, a range of components delivers high electrical conductivity within a corresponding device. For example, many electrical generation units incorporate electrically conductive elements. In particular, fuel cells can have bipolar plates that provide electrical conduction between neighboring cells connected in series while simultaneously providing for flow of fuels and oxidizing agents and preventing material flow between the neighboring cells. Similarly, many battery structures incorporate electrically conductive elements to facilitate electrical connection of the battery poles with the battery electrodes.

Articles made from a polymer with an electrically conductive filler, such as carbon nanotubes, carbon black, carbon fibers, or carbon nanofibers, are commonly utilized to address such issues in various articles, including for instance material-handling equipment, electronic devices, fluid-handling equipment, electrically conductive elements for electrochemical cells, containers, carriers, bipolar plates, and the like.

Nanocomposites are compositions in which a continuous phase has dispersed or distributed in it at least one additional constituent such as particles, rods, or tubes where the additional constituent has one or more dimensions, such as length, width or thickness, in the nanometer or molecular size range. In order to effectively improve the physical or mechanical properties of the composite, it is important to disperse these additional constituents throughout the polymer in order to promote more interfaces and enhance the affinity between the additional constituents and polymer. If the added constituent is uniformly dispersed throughout the polymer, less material may be added to the nanocomposite composition without adversely affecting the physical properties of the nanocomposite.

Nanotubes are an example of nanometer or molecular size materials that may be used as an additional constituent in a nanocomposite. These nanotubes may be doped with conductive atoms; in some cases the dopants may be inside the tube. Examples of nanotubes are single-walled carbon nanotubes (SWNTs), multiwalled carbon nanotubes (MWNTs), and tungsten disulfide nanotubes. Individual SWNT and ropes of single-wall carbon nanotubes exhibit high strength, metallic conductivity, and high thermal conductivity. Nanotubes and ropes of nanotubes may be useful in applications where an electrical conductor is needed, for example as an additive in electrically conductive polymeric materials, paints or in coatings. Because of van der Waals attraction between nanotubes, SWNTs tend to exist as aggregates or ropes rather than tubes. During processing to form composites with other materials, SWNTs also tend to form aggregates, which can inhibit the formation of electrically conductive nanotube networks or rheological networks in the composite. In polymers, SWNTs have substantial potential for enhancing the polymers' strength, toughness, electrical conductivity, and thermal conductivity. However, achieving the full potential of the properties of nanotubes in polymers has been hampered by the difficulty of dispersing the nanotubes, and compared to other types of conductive filler components, nanotubes can increase the expense of the resulting product.

Approaches to promote more affinity between nanotubes and the polymer at the interface and provide a uniform dispersion of the nanotubes within the polymer include the use of dispersing agents or modifying the surface chemistry of the nanotubes. Dispersing agents such as surfactants, or nanotube surfaces modified with carboxylic, amide groups, or surface bound polymers have been used to facilitate nanotube incorporation into a polymer. These treatments add impurities and additional steps to the process, which increase the costs of the nanocomposite. Other approaches include dispersing the nanotubes in a solvent and mixing this dispersion with a polymer that is also dissolved in a solvent. The solution can be cast into films following removal of the solvent. The additional dispersal, casting, and solvent removal steps to enhance the affinity between the nanotubes and the polymer at the interface add time, generate waste, and increase the cost of such nanocomposite. Barraza et al, NANO Letters, vol. 2, pp. 797-802 state that the literature discloses that solution casting methods have limited applicability for producing highly conductive films because SWNT composites tend to saturate at 1-2% nanotube content as the excess nanotubes aggregate. This limits the compositions that can be formed by this method.

Haggenmuller observed progressive improvement in nanotube dispersion, with mixing cycles of 20 or more (see pp 221, Chemical Physic letters vol. 330 (2000), pp 219-225). Haggenmuller formed a solution of the polymer in a solvent and dispersed SWNTs into it with sonication, the mixtures were cast and the solvent evaporated. In a second method, cast films were broken and hot pressed-this melt mixing repeated up to 25 times. It was reported that the dispersion increased with each additional melt mixing cycle. Elkovitch et al, U.S. Patent Application Publication No.: 20050029498 discloses that highly pure SWNT cannot be separated from the ropes as easily as less pure SWNT and that the shear forces developed during the extrusion process are not as effective at breaking up the aggregates of SWNTs formed by highly pure SWNTs. SWNT polymer compositions disclosed by Elkovitch include levels of iron for example that can vary from a few tenths of a percent to greater than 10%. Further, Elkovitch et al (U.S. Pat. Publication No.: 20050029498) disclose that production related impurities facilitate the dispersion of ropes of carbon nanotubes within a matrix of an organic polymer and that compositions prepared with carbon nanotubes have a surface resistivity that varies with the amount of energy imparted over time to a composition of polymer and nanotubes during mixing. Elkovitch observed a decrease in resistivity for some impurity containing SWNT polymer samples during mixing and a decrease and then an increase in other impurity containing SWNT polymer samples during mixing. Smalley, U.S. Pat. No. 6,936,233 discloses a method for the purification of as-produced single wall carbon nanotubes to remove production related impurities.

Du et al (Macromolecules 2004, 37, pp 9048) describe the dispersion of SWNTs in a polymer formed by coagulation. In the coagulation method, a polymer is dissolved in a solvent (Du et. al J. Polym. Sci., Part B: Polym. Phys. (2003), vol. 41, pp 3333-3338), purified nanotubes are added to a solvent and sonicated for 24 hours to disperse the SWNTs in the solvent. A polymer was dissolved in the SWNT solvent mixture or solution or suspension. This suspension was dripped into a non-solvent in a blender, the precipitating polymer chains entrapped the SWNTs and prevented them from bundling again. The precipitate was filtered and dried in vacuum. Coagulation is a method that can be sensitive to the purification method used to treat the nanotubes and creates waste solvent. Fibers of the precipitate were subsequently melt spun.

Andrews dissolved pitch in a solvent, added and dispersed purified nanotubes to the hot pitch solution and sonicated the mixture. Vacuum distillation was used to remove solvent and prepare suspensions of SWNTs. This pitch suspension could be cooled to a solid and subsequently compression molded or extruded to form a thread. The compression molded article or thread was then oxidatively stabilized by heating and then subsequently carbonized at 1100 C. Petroleum pitch is a residue from heat treatment and distillation of petroleum fractions. It is a solid at room temperature, consists of a complex mixture of numerous predominantly aromatic and alkyl-substituted aromatic hydrocarbons, and exhibits a broad softening point range instead of a defined melting point. Pitch is soluble in some organic solvents, which need to be removed and disposed of to form suspensions of the nanotubes. Pitch is an unacceptable material for many high purity applications and those requiring high wear resistance. Andrews et al report (Macromol. Mater. Eng. Vol. 287, pp. 395-403, (2002)) on the effect of shear mixing on MWNT lengths and reported that tube length decreases from about 20 micron to about 5 microns with increasing energy input into the mixing system.

Potschke et al (Polymer, vol. 43, pp. 3247-3255, (2002) prepared multiwalled nanotube composites compression molded in polycarbonate. At a concentration between 1 and 2% MWNTs, a reduction in resistivity from about 10¹³ ohm/sq to about 10³ ohm/sq was observed. At a frequency of about 0.1 rad/s the polycarbonate had a storage modulus G' of about 2 GPa (extrapolated) while 1% wt MWNT had a storage modulus G' of about 20 GPa (extrapolated) and a 5 wt % MWNT had a storage modulus G' of about 20,000 GPa. Sennett et al (Mat. Res. Soc. Symp. Proc. Vol. 706, pp. 97-102, (2002) prepared MWNT and SWNT composites in polycarbonate by conical twin screw extrusion. The authors reported that MWNTs were degraded at processing times used to partially disperse SWNTs (ropes still present). They also reported that SWNTs appeared to be more difficult to disperse than MWNTs and that complete dispersion of SWNTs was not achieved at the processing times studied.

Kawagashi et al. (Macromol. Rapid Commun. (2002), 23, 761-765) prepared melt blended MWNTs in polypropylene by first forming a polypropylene melt and then adding MWNTs. These composite materials were evaluated for their fire retardency.

Smalley et al. (U.S. Patent Application Publication No. 2002/0046872) discloses polymer-coated and polymer wrapped single-wall nanotubes (SWNTs), small ropes of polymer-coated and polymer-wrapped SWNTs, and materials comprising them. According to the disclosure, nanotubes are solubilized or suspended, optionally with a surfactant, in a liquid by associating them robustly with linear polymers compatible with the liquid used, for example, polyvinyl pyrrolidone and polystyrene sulfonate. The wrapped nanotubes are removed from solution, the polymer wrapping remains, and the
tubes form an aggregate in which the individual tubes are substantially electrically-isolated from one another. The polymeric wrappings around the tubes may be cross-linked by introduction of a linking agent, forming a different material in which individual, electrically-isolated SWNT are permanently suspended in a solid cross-linked polymeric matrix. Smalley et al (U.S. Pat. No. 7,008,563) disclose polymer wrapped single wall carbon nanotubes, however these wrapped nanotubes are used to make dielectric materials because the polymer wrapping prevents nanotube to nanotube contact.

Patel et al. (U.S. Patent 6,528,572) discloses compounding a polymeric resin, electrically conductive filler, antistatic agent and any other additives to form a substantially uniform conductive resin composition. Surface resistivity was measured for compositions containing a polymer resin (acrylonitrile-butadiene-styrene resin or a polyphenylene ether-high impact polystyrene resin), an antistatic agent, and carbon fibers. Both the surface and volume resistivity decrease as the weight percent of the conductive component (carbon fibers and antistatic agent) are increased.

Hirai et al. (U.S. Patent 5,227,238) discusses carbon fiber reinforced thermoplastics prepared by the use of milled fiber of an extremely short fiber length has inferior characteristics in comparison with one prepared by using carbon fiber chopped strands because of the short length of the milled fiber. As such, Hirai et al. discloses carbon fiber chopped strands suitable for use in production of a composite with a matrix material wherein the carbon fiber filaments are bundled by a sizing agent and having a length from 1 to 10 mm and a diameter from 30 to 20,000 µm.

US 2010/003438 A1 discloses a thermoplastic composite material comprising a thermoplastic, organic polymer, a plurality of carbon nanotubes, wherein the thermoplastic composite material exhibits a bulk volume resistivity of about 10³ Ω-cm to 10¹⁰ Ω-cm at 5,000 volts DC.

US 2010/0237883 A1 discloses a composition comprising a polymer melt and an amount of single walled carbon nanotubes extrusion compounded together in the composition, the amount of said nanotubes dispersed in the polymer, said composition has a storage modulus G' that is substantially invariant with further extrusion compounding of the composition.

US 6,998,434 B2 describes a carbon fiber reinforced resin composition comprising the following essential components (A), (B) and (C) Component (A): 0.01 to 0.7% by
weight of vapor grown carbon fiber and/or nanotubes based on 100% by weight of the carbon fiber reinforced resin composition, of which the average diameter of single fiber ranges from 1 to 45 nm; Component (II): 6 to 40% by weight of carbon fiber based on 100% by weight of the carbon fiber reinforced resin composition, of which the average diameter of single fiber ranges from 1 to 20 [mu]m; and Component (C): resin comprising at least one selected from the group consisting of polyamide resin, styrenic resin, polycarbonate resin, modified polyphenylene ether resin, polyester resin, poly(phenylenesulfide) resin, polyolefin resin, liquid crystal polymer, phenolic resin and elastomer.

Li J., Zhang L.Q., Materials Science and Technology, Vol. 27, No. 1, pages 252 - 256, January 1, 2011, discloses carbon fibre reinforced polyether ether ketone composite with carbon nanotubes and carbon fibres. The carbon fibres had the length of 75 µm and the diameter of 7.5 µm.

### SUMMARY OF THE INVENTION

One aspect of the invention provides a composition as defined in claim 1. Various optional features of the composition of claim 1 are defined in claims 2 to 4.

Optionally, in the composition defined in claim 1, the polymer melt may be a high temperature, high strength thermoplastic polymer.

Optionally, in the composition defined in claim 1, the carbon nanotubes may comprise single wall carbon nanotubes, multiple wall carbon nanotubes, or a combination thereof.

Optionally, in the composition defined in claim 1, the polymer melt may comprise PEEK, PI, or PEI.

Optionally, in the composition defined in claim 1, the amount of carbon nanotubes may be less than about 5% by weight.

Optionally, in the composition defined in claim 1, the amount of carbon nanotubes may be about 3% by weight or less.

Optionally, in the composition defined in claim 1, the amount of carbon fibers may be between about 20% and about 50% by weight.

Optionally, in the composition defined in claim 1, the amount of carbon fibers may be between about 30% and about 45% by weight and further optionally the amount of carbon nanotubes may be between about 1.0% and about 2.0% by weight.

Another aspect of the invention provides a composition as defined in claim 5. Various optional features of the composition defined in claim 5 are defined in claims 7 and 8.

Optionally, the nanotubes in the composition defined in claim 5 may have an aspect ratio of 100 or more.

Optionally, the composition defined in claim 5 may have a surface resistivity less than 10⁹ ohms/sq.

Optionally, the amount of nanotubes in the composition defined in claim 5 may be between 0.5 wt % and 5 wt %.

Another aspect of the invention provides a method as defined in claim 9. Various optional features of the method defined in claim 9 are defined in claims 10 to 13.

Optionally, in the method defined in claim 9, nanotubes may comprise single wall carbon nanotubes, multiple wall carbon nanotubes, or a combination thereof.

Optionally, in the method defined in claim 9, the amount of the carbon fibers may be less than about 50% by weight.

Optionally, in the method defined in claim 9, the amount of nanotubes may be between about 1% and about 3% by weight.

Optionally, in the method defined in claim 9, the composite may be fed from the extruder to a shaping apparatus where the composite is formed into an article having a desired shape and size. The shaping apparatus may optionally be selected form the group consisting of rollers, injection molds, compression molds, and combinations thereof.

Another aspect of the invention provides an article as defined in claim 14. Various optional features of the composition of claim 14 are defined in claims 15 and 16.

Embodiments of the present invention include compositions comprising a polymer melt, an amount of nanotubes, and an amount of finely milled carbon fibers extrusion compounded together, the amount of the nanotubes and the amount of the finely milled carbon fibers dispersed in the polymer melt form a composite material. In some embodiments of the present invention, compositions can be made in a single melt extrusion step without additional melt extrusion cycle steps. In some embodiments of the present invention, the compositions consists or consists essentially of a polymer melt, an amount of nanotubes and an amount of finely milled carbon fibers extrusion compounded together. Compositions in embodiments of the present invention can be made in a single melt extrusion step without additional melt extrusion cycle steps. The compositions in versions of the present invention do not involve coagulation or casting and can be made free of solvent or process steps such as solvent removal, filtration, and drying.

Embodiments of the invention include compositions comprising a polymer melt, an amount of nanotubes, and an amount of finely milled carbon fibers extrusion compounded together, where it is contemplated that the amount of the nanotubes and the amount of the finely milled carbon fibers dispersed in the polymer melt form a composition that has a storage modulus G' that is substantially invariant with further extrusion compounding of the composition. In some embodiments of the present invention, it is contemplated the composition is substantially invariant to an increase in storage modulus and/or to a decrease in resistivity after one or more extrusion cycles. Compositions in embodiments of the present invention can be made in a single melt extrusion step without additional melt extrusion cycle steps.

In some embodiments of the present invention, the compositions consists or consists essentially of a polymer melt, an amount of nanotubes, and an amount of finely milled carbon fibers extrusion compounded together, where it is contemplated that the amount of the nanotubes and the amount of the finely milled carbon fibers dispersed in the polymer melt to form a composition that has a storage modulus G' that can be substantially invariant with further extrusion compounding of the composition. In some embodiments of the present invention, it is contemplated that the storage modulus does not increase with further extrusion compounding. Compositions in embodiments of the present invention can be made in a single melt extrusion step without additional melt extrusion cycle steps.

The compositions in versions of the present invention do not involve coagulation or casting and can be made free of solvent or process steps such as solvent removal, filtration, and drying.

In some embodiments, the polymer melt with dispersed nanotubes and finely milled carbon fibers comprises high temperature, high strength thermoplastic polymers. In some embodiments these polymers can be poly ether ether ketone (PEEK), polyimides (PI), or polyetherimide (PEI); in other embodiments the polymer comprises PEEK or PEI; in still other embodiments the polymer comprises PEEK; in some embodiments the polymer can be a blend of any of these polymers.

In some embodiments, the nanotubes are single walled carbon nanotubes (SWNTs), multiwalled carbon nanotubes (MWNTs), tungsten disulfide nanotubes, or other commercially available nanotubes, ropes of these, or a combination of these where the amount of the nanotubes in the polymer can be less than about 5% by weight, in some embodiments about 4% or less by weight, in some embodiments about 3% or less by weight, and in still some other embodiments less than about 2% by weight. In some embodiments of the invention the amount of nanotubes in the polymer may range from about 0% to about 5% by weight, in some embodiments about 0.5% to about 4% by weight, in some embodiments about 1% to about 3% by weight, and in still other embodiments about 1.25% to about 2.5% by weight. The nanotubes are at least partially deagglomerated or dispersed in a network compared to their initial state such as before extrusion compounding.

In some embodiments, the finely milled carbon fibers are initially provided as carbon fibers having an aspect ratio greater than about 10, such as about 20, and then undergo a process to modify or otherwise change the aspect ratio until the aspect ratio is greater than 1 and less than about 5, in some embodiments between about 1.5 and about 5, and in still other embodiments between about 2 and about 4. In some embodiments, in order to modify the aspect ratio, the carbon fibers are milled, pulverized, ground, chopped, broken under shear force, or the like. It should be understood herein, that the term "finely milled carbon fibers" refers to the resulting carbon fibers having a reduced length and/or diameter such that the aspect ratio (length/diameter), irrespective of the process used to modify them, has an aspect ratio greater than 1 and less than about 5, in some embodiments between about 1.5 and about 5, and in still other embodiments between about 2 and about 4. In some embodiments, before undergoing the modification process, the carbon fibers are about 5 microns to about 20 microns in diameter and about 100 microns to about 25,000 microns in length with longer lengths contemplated, and the resulting finely milled carbon fibers have an aspect ratio greater than 1 and less than about 5, in some embodiments between about 1.5 and about 5, and in still other embodiments between about 2 and about 4. In some embodiments, before undergoing the modification process, the carbon fibers are about 6 microns to about 18 microns in diameter and about 110 microns to about 2,500 microns in length with longer lengths contemplated, and the resulting finely milled carbon fibers have an aspect ratio greater than 1 and less than about 5, in some embodiments between about 1.5 and about 5, and in still other embodiments between about 2 and about 4. In some embodiments, after undergoing the modification process, the carbon fibers have an average diameter between about 5 microns and about 12 microns and an average length between about 10 microns and about 40 microns.

In some embodiments, the carbon fibers as initially provided are finely milled carbon fibers having an aspect ratio greater than 1 and less than about 5, in some embodiments between about 1.5 and about 5, and in still other embodiments between about 2 and about 4, wherein the initially provided carbon fibers do not need to undergo any processing to modify or change the length and/or diameter of the carbon fibers. It should be understood herein, that the term "finely milled carbon fibers" thus also refers to the carbon fibers having an initial or original length and diameter such that the aspect ratio (length/diameter) is greater than 1 and less than about 5, in some embodiments between about 1.5 and about 5, and in still other embodiments between about 2 and about 4. In some embodiments, the carbon fibers have an average diameter between about 5 microns and about 12 microns and an average length between about 10 microns and about 40 microns and an aspect ratio greater than 1 and less than about 5. In some embodiments, the carbon fibers have an average diameter between about 6 microns and about 10 microns and an average length between about 10 microns and about 30 microns and an aspect ratio greater than 1 and less than about 5.

In some embodiments, the finely milled carbon tubes in the polymer can be greater than about 20% by weight, in some embodiments greater than about 25% by weight, in some embodiments greater than about 30% by weight, in some embodiments greater than about 35% by weight, in some embodiments greater than about 40% by weight, in some embodiments greater than about 45% by weight, and in still some other embodiments less than about 50% by weight. In some embodiments of the present invention, the amount of the finely milled carbon fibers in the polymer can be between about 20% to about 50% by weight, in some embodiments about 25% to about 45% by weight, in some embodiments about 30% to about 40% by weight, and in still other embodiments about 33% to about 38% by weight. In some embodiments, the finely milled carbon fibers are not agglomerated in their initial state, such as before extrusion compounding.

In some embodiments of the present invention, the compositions or articles have an electrical resistivity of less than about 10¹³ ohm/sq; some compositions or articles have a resistivity of less than about 10¹¹ ohm/sq; some compositions or articles have a resistivity of less than about 10⁹ ohm/sq; some compositions or articles have a resistivity of less than about 10⁷ ohm/sq; and other embodiments of compositions or articles are contemplated to have an electrical resistivity of less than about 10⁵ ohm/sq. In some embodiments, the electrical resistivity of the compositions or articles may be tunable by varying the amount of the nanotubes and/or the amount of the finely dispersed carbon fibers in the polymer.

Another embodiment of the invention is a first composition comprising a polymer melt as a continuous phase and an amount of nanotubes and an amount of finely milled carbon fibers extrusion compounded together, such that the composition is contemplated to have a storage modulus G' that is substantially invariant, or does not increase, with further extrusion compounding of the composition. The composition is contemplated to have an axial force measured in a squeeze flow test of the composition that is greater than an axial force measured on a second extrusion compounded polymer composition comprising the same type of nanotubes and finely milled carbon fibers dispersed into an extruded melt of the polymer. In the second extrusion compounded polymer, at least the nanotubes and optionally the finely milled carbon fibers are added into an extruded melt of the polymer at a location equal to or greater than half the length of an extruder used to make the first composition. The contemplated high value of the storage modulus would indicate that the nanotubes and finely milled carbon fibers are dispersed, and an essentially constant value of the storage modulus would indicate that the polymer matrix is not degraded by the initial dispersion and or distribution of the nanotubes and finely milled carbon fibers into the polymer matrix.

Nanotubes and in particular SWNTs are difficult to disperse due to the high van der Waal interaction between the nanotubes. Efforts have been made to overcome these forces by dispersion of the nanotubes in a solvent and casting with a soluble polymer, copolymerization of solvated nanotube with monomer, coagulation dispersion, surface functionalization, polymer wrapping and other methods. A process, and in some versions a continuous process as disclosed in U.S. Patent Application Publication 2010/0267883, is used for dispersing the nanotubes and/or the finely milled carbon fibers in various polymer matrices to prepare compositions with a high dispersion or distribution of nanotubes and finely milled carbon fibers in the continuous polymer matrix. These compositions include a network or dispersion of the nanotubes and finely milled carbon fibers in the continuous polymer matrix such that the compositions have an increased storage modulus over the starting polymer and where the storage modulus of the composition depends on the amount of nanotubes and finely milled carbon fibers dispersed in the matrix. Further, the storage modulus is contemplated to be essentially invariant, or does not increase, with continued extrusion cycles of the material. The compositions in embodiments of the present invention can be molded to form articles and products with various molding processes. Further, compared to compositions with only nanotubes dispersed in the polymer, the compositions of the present invention are less process sensitive such that varying the shear flow conditions of the molding process will not substantially affect the electrical resistance of the molded article.

In some embodiments of the present invention, a dispersion of MWNTs and finely milled carbon fibers in a melt processable polymer without dispersion additives forms an electrically dissipative article when melt processed (extrusion, injection molding, compression mold, coining) under shear flow conditions. The shear conditions maintain a network or dispersion of MWNTs and finely milled carbon fibers in the polymer such that the average surface resistance of the resulting product is between about 10⁶ ohms and about 10⁸ ohms.

In some embodiments, the dispersion of nanotubes and finely milled carbon fibers is in PEEK, PEI, PI, combinations or blends of these, or co-polymers including any of these. The dispersion of the nanotubes and finely milled carbon fibers in the melted polymer can be formed into various articles with different degrees of interconnecting networks of the nanotubes and finely milled carbon fibers based on the shear flow conditions used to process the dry mixed melted mixture of nanotubes and finely milled carbon fibers with the polymer. Articles with different electrical dissipative characteristics can be made based on varying the amount of the nanotubes and/or the amount of finely milled carbon fibers dispersed in the polymer.

Embodiments of the present invention provide composite materials having substantially uniform surface resistivity across a sample or article made from the composite materials. In some embodiments, the substantial uniform surface resistivity of any point on the surface of a sample of the composite of nanotubes and finely mille carbon fibers in the polymer is within a factor of 100 and in some embodiments within a factor of 10 from any other test point on the sample. This is advantageous in electrostatic discharge applications of the composites in articles such as chip trays, reticle and wafer carriers, wafer shippers, test sockets and the like.

Advantageously embodiments of the present compositions and methods for making them eliminates the cost, waste, and time used to remove solvent from cast dispersions of nanotubes and/or carbon fibers in dissolved polymers. These embodiments of the compositions can be formed free or essentially free of additives, solvents, without sidewall or end functionalization of the nanotubes or ropes, or any combination of these. These compositions can be formed free of nanotubes or ropes chemically bonded through a linker, either through their side or an end to the polymer. The dispersions can be made free of cross linking agent. Further, by eliminating excess solvent, compositions of the present invention will have a low solvent outgassing and molecular contamination, which may be determined by Gas Chromatography Mass Spectroscopy (GCMS), Inductively Coupled Plasma Mass Spectroscopy (ICPMS), ICMS thermal gravimetric analysis and or TG-MS. This can be an important property for such materials where low levels of contamination, for example part per million or less, part per billion or less, or part per trillion or less of outgassing vapors can adsorb onto and be detrimental to materials such as bare and coated wafers, reticles, lens, or other substrates as well as processes used in semiconductor and pharmaceutical applications. Lower levels of outgassing or gas permeability in compositions of the present invention are advantageous in reducing defects caused by for example but not limited to reticle haze, adsorption of gases such as hydrocarbons on substrates, or adsorption of contaminants which can alter the refractive index of optical components.

Advantageously embodiments of the present compositions and methods for making them also allow for high carbon loading levels while simultaneously providing reduced electrical resistivity at lower nanotube loading than traditionally available, which also reduces costs of the composition and resulting articles. Also, the high carbon loading levels can be achieved while reducing or eliminating the detrimental particle-particle interactions or particle-base polymer interactions that are often encountered with other small-sized carbon fillers (i.e., carbon black, carbon nanofibers, and carbon nanotubes), which results in lower maximum loading carbon levels. Further, embodiments of the present compositions and methods for making them also retain the relatively larger filler size of the carbon fibers such that the rheological properties of the base resin are substantially retained or more similar than compared to other smaller-sized carbon fillers. Still further, embodiments of the present compositions and methods for making them isotropic where anisotropy is substantially reduced or eliminated, including shrink variability and warpage issues, of finished articles that is traditionally observed due to the non-random orientation of carbon fibers that is often dependent upon the carbon fibers orienting in a manner that depends upon the local flow field, which results in local variability in shrink and therefore contributes to warping of finished articles. Yet still further, embodiments of the present compositions and methods for making them also provide for polymer blends that flow easily and similar to the base polymer during processing.

Polymer compositions comprising dispersed or distributed nanotubes and finely milled carbon fibers in embodiments of the present invention are contemplated to have a storage modulus and electrical resistivity that do not appreciably change with additional melt extrusion melting cycles. This is advantageous over other processes where repeated melt processing resulted in a change in the properties of a SWNT polymer composite. Embodiments of the present invention can provide polymer composites with consistent electrical and mechanical properties that enable tighter process control over articles such but not limited to chip carriers, reticle domes, wafer carriers or other housing or fluid contacting articles. Electrically dissipative polymer articles can be made from embodiments of the present invention without stretch aligning films of SWNTs in a polymer.

Compositions and articles made from them in embodiments of the present invention may be used in a variety of engineering and structural plastics. These plastics may be used to make electrically dissipative materials for example but not limited to substrate carriers such as but not limited to wafer carriers, reticle pods, shippers, chip trays, test sockets, head trays (read and or write); fluid tubing, chemical containers, and the like. Compositions of the present invention may be used to make fire retardant plastics and structural materials for use in applications that benefit from increased thermal conductance (heat exchangers, sensors, light weight automotive parts). The nanotubes and/or finely milled carbon fibers can be part of composite materials to elicit specific physical, chemical or mechanical properties in those materials such as but not limited to electrical and/or thermal conductivity, chemical inertness, mechanical toughness, and combinations of these. The carbon nanotubes themselves and materials and structures comprising carbon nanotubes such as SWNTs may also be useful as supports for catalysts used in industrial and chemical devices and processes such as fuel cells, hydrogenation, reforming and cracking.

Advantageously carbon nanotubes and carbon fibers are stronger than carbon particles, for applications where reduction or elimination of particle shedding is important, the use of finely milled carbon fibers and carbon nanotubes would provide less particles. SWNTs and carbon fibers are cleaner than carbon powders. Because lower nanotube loading can be utilized while maintaining a high carbon loading level with the finely milled carbon fibers in order to achieve the flame retardant or electrically dissipative properties and a continuous process can used to prepare the polymer/nanotube/finely milled carbon fiber dispersion in embodiments of the present invention, composites and articles made from them in embodiments of the present invention can be less expensive per pound compared to traditional multiwall nanotube polymer composites, traditional singlewall nanotube polymer composites, and traditional carbon fiber polymer composites.

### BRIEF DESCRIPTION OF THE DRAWINGS

The present invention may be more completely understood in consideration of the following detailed description of various embodiments of the invention in connection with the accompanying drawings, in which:

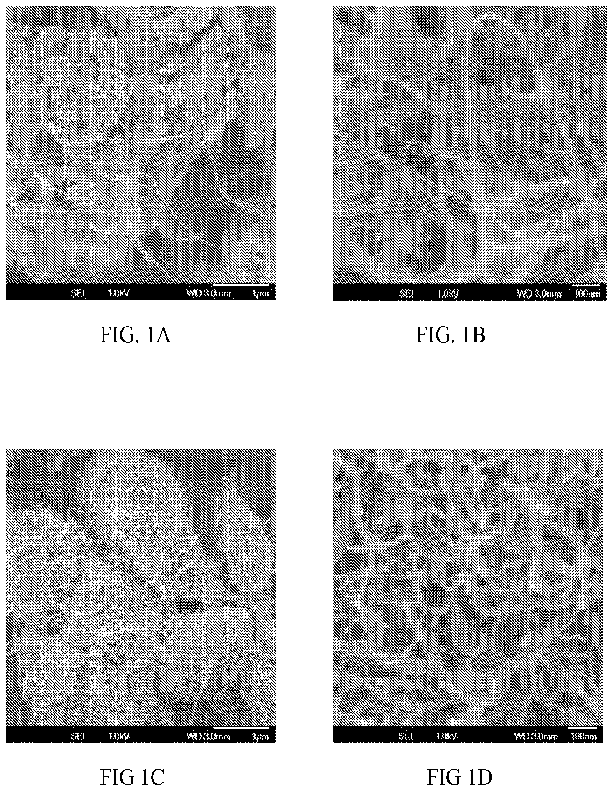

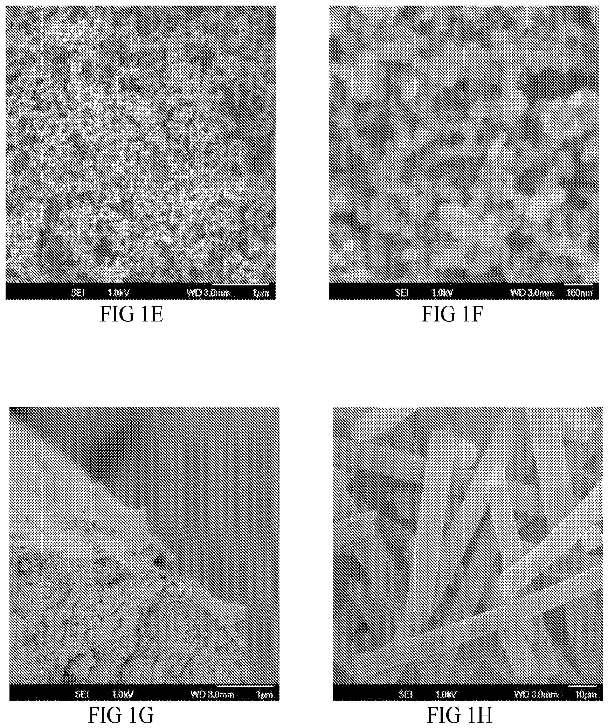

FIGS. 1A-1H are SEM images of various types of carbon. FIGS. 1A and 1B are SEM images of SWNTs with the scale bar being 1 micron and 100 nm, respectively. Under normal circumstances as shown in the SEM images, SWNTs exist in bundles of different sizes and not usually as individuals. FIGS. 1C and 1D are SEM images of MWNTs with the scale bar being 1 micron and 100 nm, respectively. Under normal circumstances as shown in the SEM images, MWNTs exist as individuals of different sizes. FIGS. IE and IF are SEM images of carbon powder with the scale bar being 1 micron and 100 nm, respectively. Under normal circumstances as shown in the SEM images, carbon powder particles form large agglomerates. FIGS. 1G and 1H are SEM images of carbon fibers with an aspect ratio greater than 10 and prior to any processing with the scale bar being 1 micron and 10 microns, respectively. Under normal circumstances as shown in the SEM images, carbon fibers are more than about 100 times larger than the other types of carbon shown in FIGS. 1A-1F;

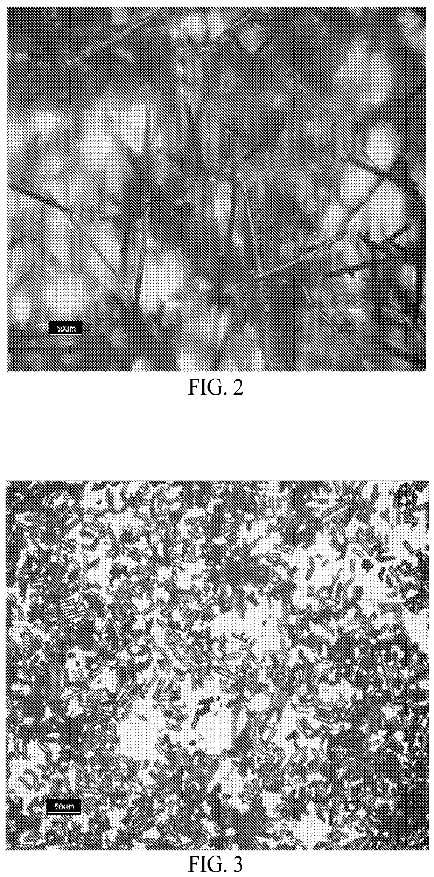

FIG. 2 is an optical microscope image of carbon fiber with the scale bar being 50 microns;
FIG. 3 is an optical microscope image of the finely milled carbon fiber according to an embodiment of the present invention with the scale bar being 50 microns;

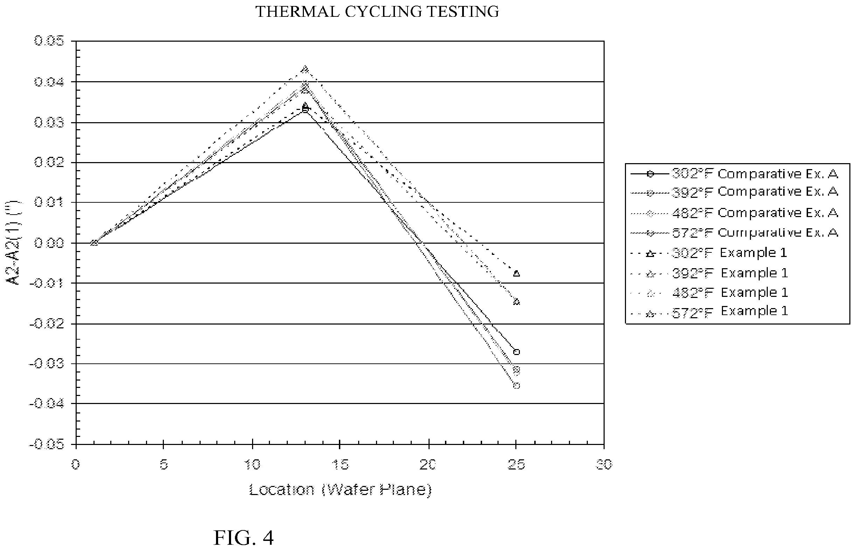

FIG. 4 is a graph of thermal cycling testing data of a sample according to the composition of Example 1 (PEEK polymer with 1.25% MWNTs and 35% finely milled carbon fibers having an aspect ratio greater than 1 and less than about 5) of an embodiment of the present invention and Comparative Example A (PEEK polymer with about 20% carbon fiber having an aspect ratio of about 20 or greater), wherein cassettes made from each of the foregoing compositions were heated to 150°C (302°F), 200°C (392°F), 250°C (482°F), and 300°C (572°F), with key dimensions measured after heating to each of these temperatures. As indicated by the data in the graph, the cassette comprised of the composition according to Example 1 has values closer to "0" than that according to Comparative Example A, indicating less variability and more isotropic property across the cassette;

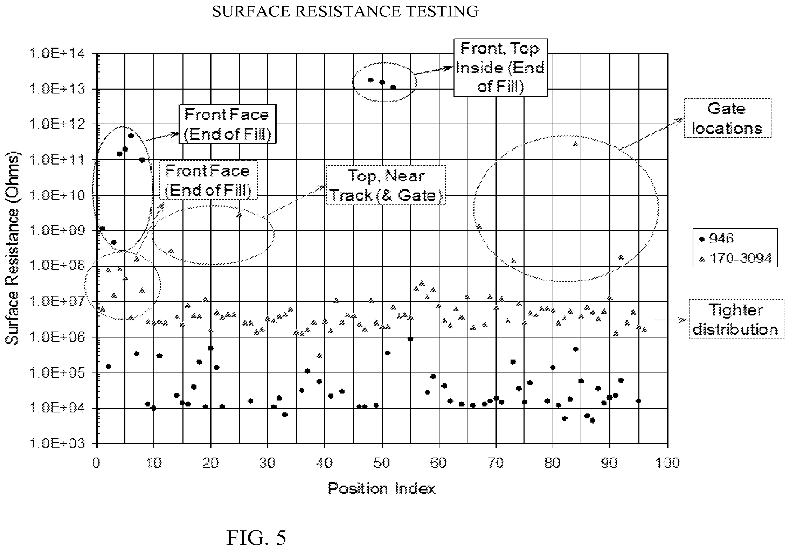

FIG. 5 is a graph of surface resistance testing data using a Pro-Stat PRS-801 resistance system with two-point probe measuring 96 locations on 200 mm cassettes composed of the compositions of both Example 1 and Comparative Example A, with the testing data indicating the cassette comprised of the composition of Example 1 contains a tighter distribution with a few outliers relating mainly to the gate and locations opposite the gate;

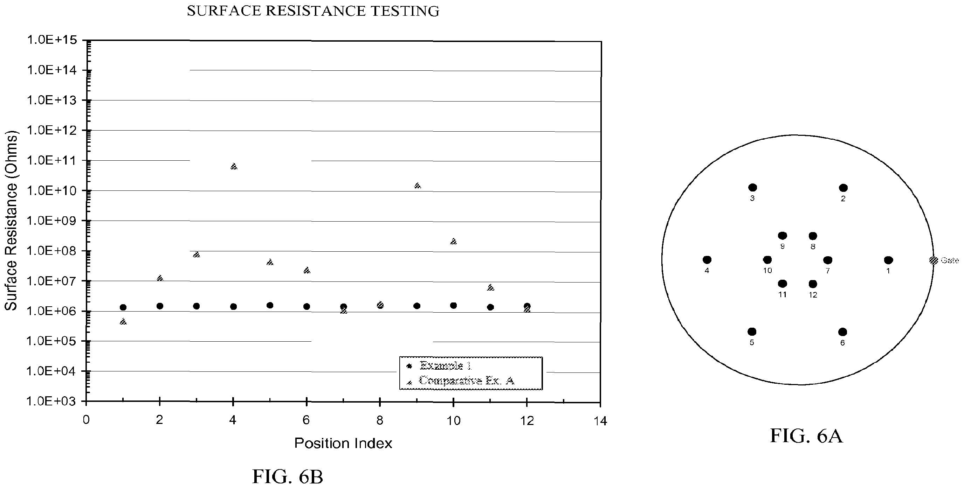

FIG. 6A is a diagram of a disc with 12 locations identified for measuring the surface resistance, and FIG. 6B is a graph of surface resistance testing data using a Pro-Stat PRS-801 resistance system with two-point probe measuring the 12 locations identified in FIG. 6A with the discs composed of compositions of both Example 1 and Comparative Example B (PEEK with about 20% carbon fiber having an aspect ratio of about 20 or greater) with relatively large size of carbon fibers, with the testing data indicating the disc comprised of the composition of Example 1 contains a tighter distribution;

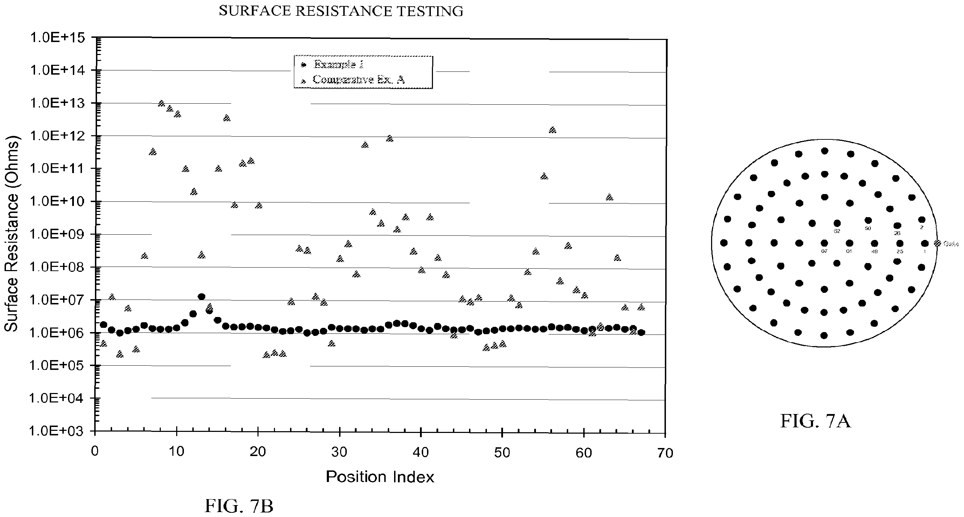

FIGS. 7A is a diagram of a disc with 67 locations identified for measuring the surface resistance, and FIG. 7B is a graph of surface resistance testing data using a Pro-Stat PRS-801 resistance system with two-point probe measuring the 67 locations identified in FIG. 7A with the discs composed of compositions of both Example 1 and Comparative Example B with relatively large size of carbon fibers, with the testing data indicating the disc comprised of the composition of Example 1 contains a tighter distribution with a reproducible, uniform surface resistance across the entire disc and a small departure at location 13, which is located opposite the gate;

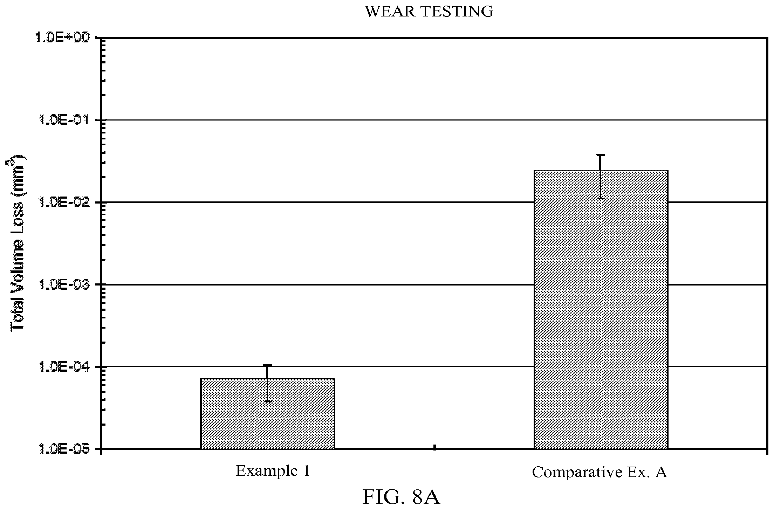

FIG. 8A is a graph of wear testing data showing the total volume (mm³) of discs composed of the compositions of Example 1 and Comparative Example A, the data obtained using an UMT-2 Tribometer from Center for Tribology (Campbell, CA) with a pin-on-disc configuration and the test parameters having a pin with hemispherica tip (R=2mm), counterface of steel (HRC = 50-50) and Ra ≈ 0.05 µm, a circular wear path a with a sliding distance of 2500 m, normal force of 0.2 kg, sliding velocity of 0.05 m/s, and the linear wear measured with capacitance sensor (0.025 µm resolution) and volume loss calculated from linear wear/sample geometry;

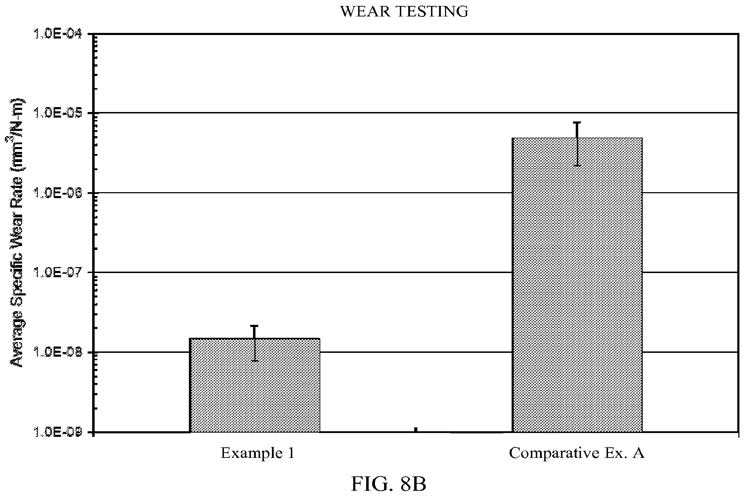

FIG. 8B is a graph of wear testing data showing average specific wear rate (mm³/N-m) of discs composed of the compositions of Example 1 and Comparative Example A, the data obtained using an UMT-2 Tribometer from Center for Tribology (Campbell, CA) with a pin-on-disc configuration and the test parameters having a pin with hemispherical tip (R=2mm), counterface of steel (HRC = 50-50) and Ra ≈ 0.05 µm, a circular wear path with a sliding distance of 2500 m, normal force of 0.2 kg, sliding velocity of 0.05 m/s, and the linear wear measured with capacitance sensor (0.025 µm resolution) and volume loss calculated from linear wear/sample geometry. The average specific wear rate is calculated by the volume loss per normal force per sliding distance;

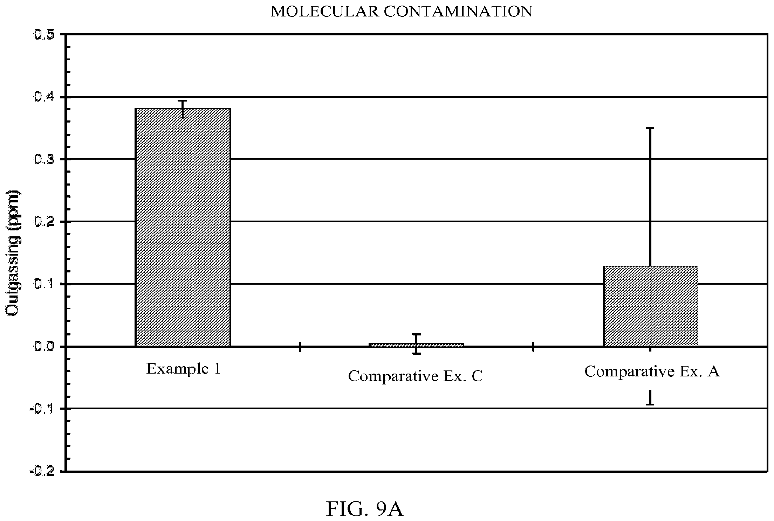

FIG. 9A is a graph of molecular contamination data showing outgassing (ppm) for materials composed of compositions of Example 1, Comparative Example A and Comparative Example C (PEEK with about 20 wt-% carbon fibers and an aspect ratio of about 20 or greater);

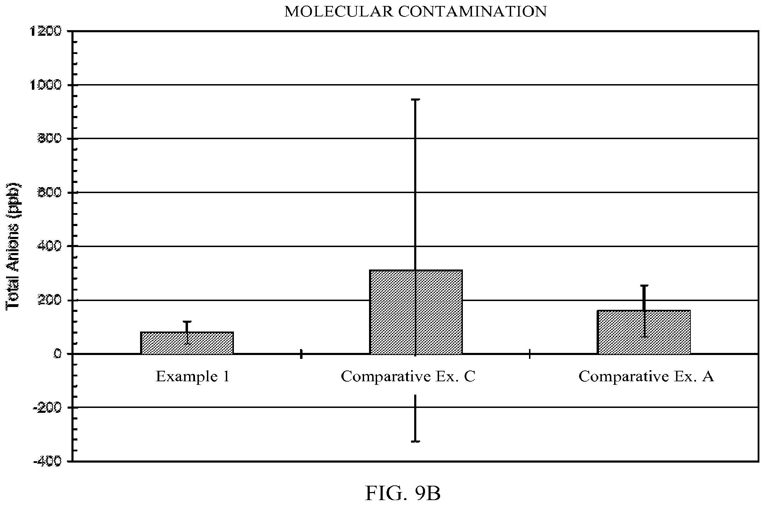

FIG. 9B is a graph of molecular contamination data showing total anions (ppb) for materials composed of compositions of Example 1, Comparative Example A and Comparative Example C;

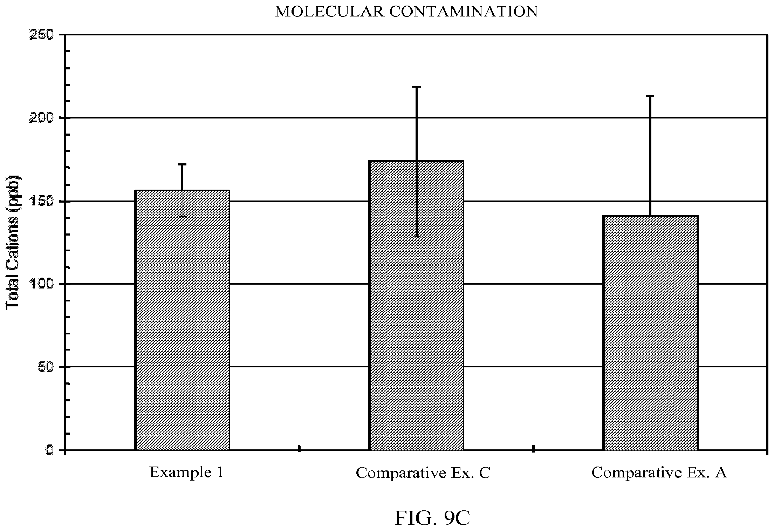

FIG. 9C is a graph of molecular contamination data showing total cations (ppb) for materials composed of compositions of Example 1, Comparative Example A and Comparative Example C;

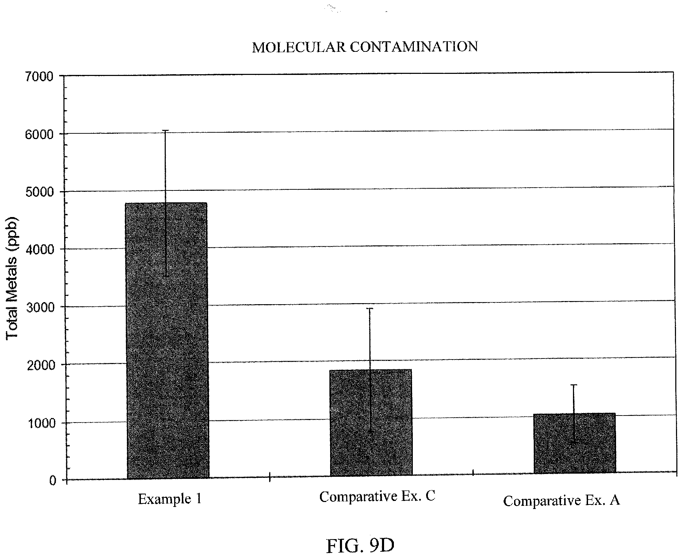

FIG. 9D is a graph of molecular contamination data showing total metals (ppb) for materials composed of compositions of Example 1, Comparative Example A and Comparative Example C, with the material composed of the Example 1 composition having higher metal concentrations due to carbon nanotubes having metal bound thereto under normal use conditions;

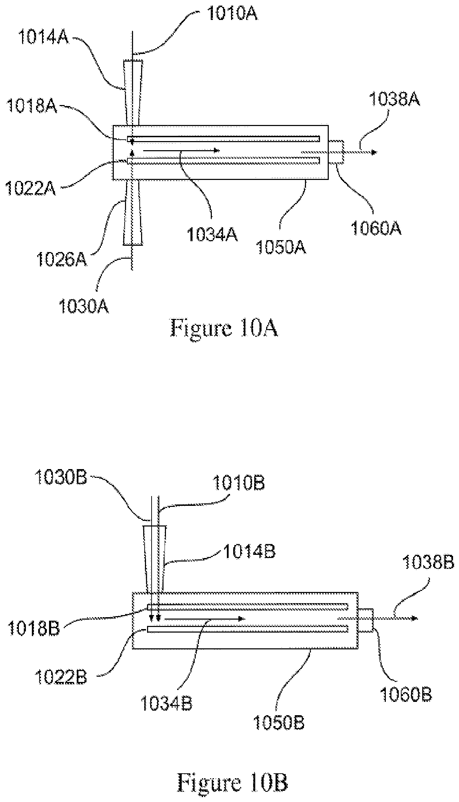

FIG. 10A schematically illustrates a non-limiting apparatus for a processes for dispersion mixing polymer 1010A and the conductive filler 1030A (nanotubes and/or finely milled carbon fibers); the extrusion can occur in an essentially contemporaneous manner, which can be flood feeding or starve feeding of the carbon filler 1030A (dry nanotubes and/or dry finely milled carbon fibers) through hopper 1026A and polymer 1010A through hopper 1014A; twin screw extruders 1018A and 1022A extrusion combine the materials to form a material 1034A in the extruder 1050A. The extruded composition 1038A can be removed from die 1060A. The extruder 1050A can be heated above the melting point of the polymer using one or more heating zones or heating gradient (not shown);
FIG. 10B schematically illustrate non-limiting apparatus for a processes for dispersion mixing polymer 1010B and the conductive filler 1030B (nanotubes and finely milled carbon fibers); the extrusion compounding can optionally use a pre-blended mix of nanotubes and/or finely milled carbon fibers and polymer with a single hopper 1014B feed to twin screw extruders 1018B and 1022B to extrusion combine the materials to form material 1034B in the extruder 1050B. The extruded composition 1038B can be removed from die 1060B. The extruder 1050B can be heated above the melting point of the polymer using one or more heating zones or heating gradient (not shown);

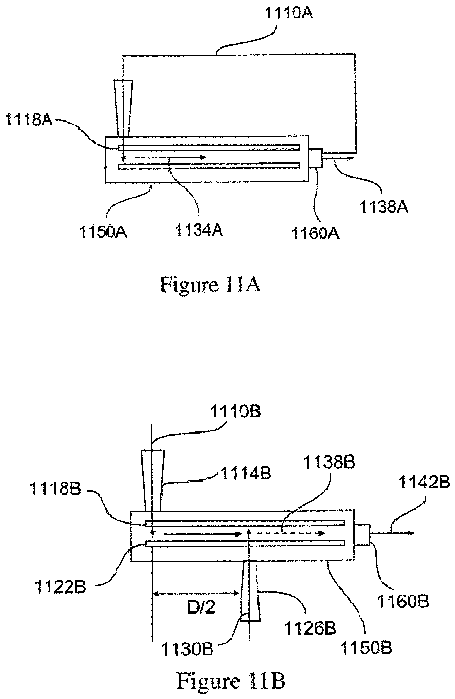

FIG. 11A illustrates cycled extrusion compounding (1110A) of an extrusion dispersed mixture of nanotubes and finely milled carbon fibers and polymer (not shown), the material 1134A formed in the extruder 1150A can be removed (1138A) from die 1160A and analyzed for storage modulus or resistivity and then fed back into the extruder as 1110A;
FIG. 11B illustrates forming a melt of the polymer 1110B from hopper 1114B and extrusion screws 1118B and 1122B, conductive filler 1130B (nanotubes and finely milled carbon fibers) can be added into to the extruded melt of the polymer 1134B for extrusion compounding at a location of hopper 1126B equal to or greater than half the length (D/2) of an extruder 1150B of length (D) to form material 1138B which can be removed at die 1160B as material 1142B;

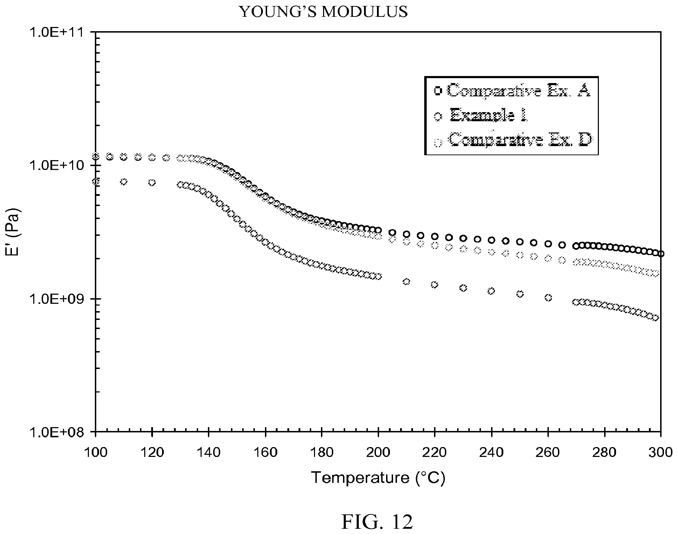

FIG. 12 is a graph of data relating to the Young's Modulus using a 3-point bending flex test for materials composed of the composition of Example 1, Comparative Example A and Comparative Example D (PEEK polymer with 1.25 wt-% MWCNTs and 35 wt-% of 150 µm carbon fibers with an aspect ratio of about 20), which as shown in the graph results in a lower Young's Modulus for the composition of Example 1 according to an embodiment of the present invention due to the shorter length of the finely milled carbon fibers;

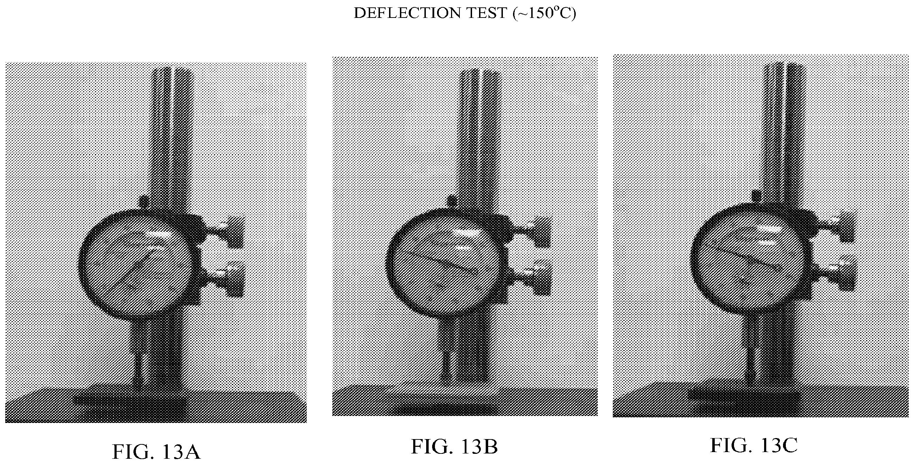

FIGS. 13A-13C are photographs of the apparatus during a deflection test at a temperature of about 150°C of articles formed from the composition of Example 1 (FIG. 13A), a comparative conductive ceramic filler comprising about 60% tin oxide and no carbon in PEEK (FIG. 13B), and a conventional carbon fiber having an aspect ratio of about 20 with a loading of about 20% in PEEK (FIG. 13C), which illustrates that the article formed from the composition of Example 1 (FIG. 13A) has the smallest deflection upon heating of the three materials;

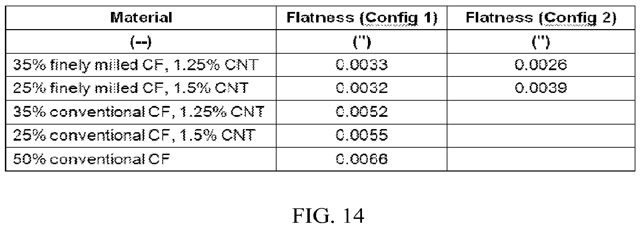

FIG. 14 is a table of flatness data for various articles formed from compositions according to embodiments of the present invention and comparative compositions, with the first two rows of compositions containing finely milled carbon fiber and MWCNTs according to embodiments of the present invention, and the comparative compositions comprising conventional carbon fiber ("convention carbon fiber") having an aspect ratio of about 20;

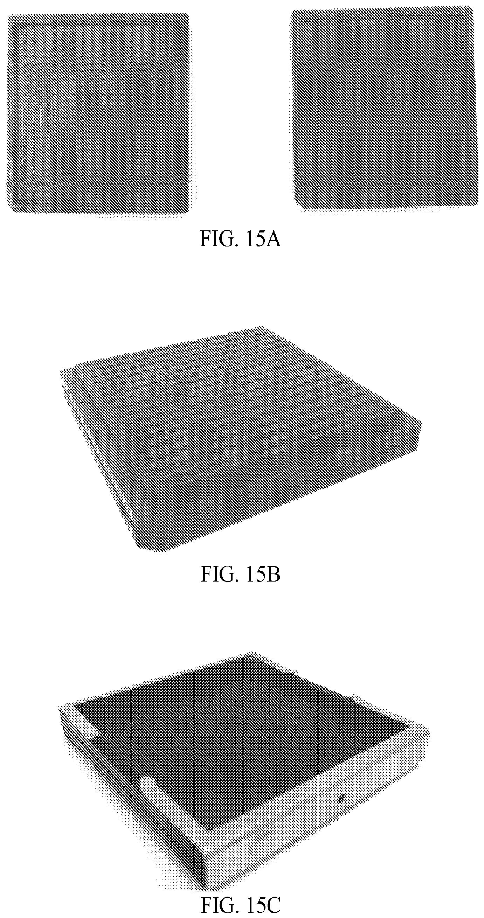

FIG. 15A is a photograph of two stack trays formed of a solidified sample of carbon nanotubes and finely milled carbon fiber dispersed in PEEK according to the composition of Example 1, the carbon nanotubes and finely milled carbon fibers were added into the extruded melt of the PEEK polymer by extrusion compounding, FIG. 15B is a photograph of a first stack tray stacked ontop of a second stack tray, and FIG. 15C is a photograph of the two stack trays stacked together with clips operably engaging the edges of the top and bottom stack trays;

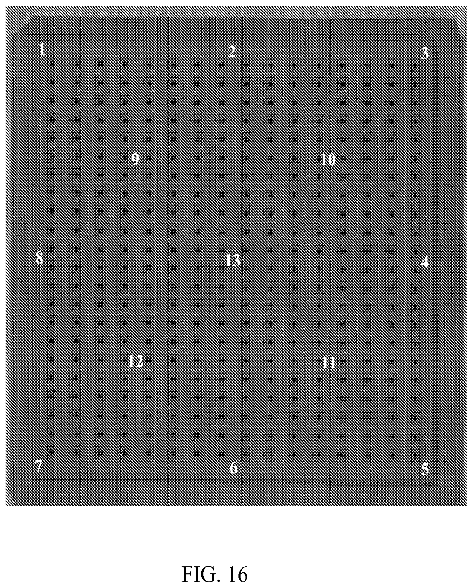

FIG. 16 is a photograph of a solidified sample of carbon nanotubes and finely milled carbon fiber dispersed in PEEK according to an embodiment of the present invention with 13 locations identified for measuring the flatness of the resulting article;

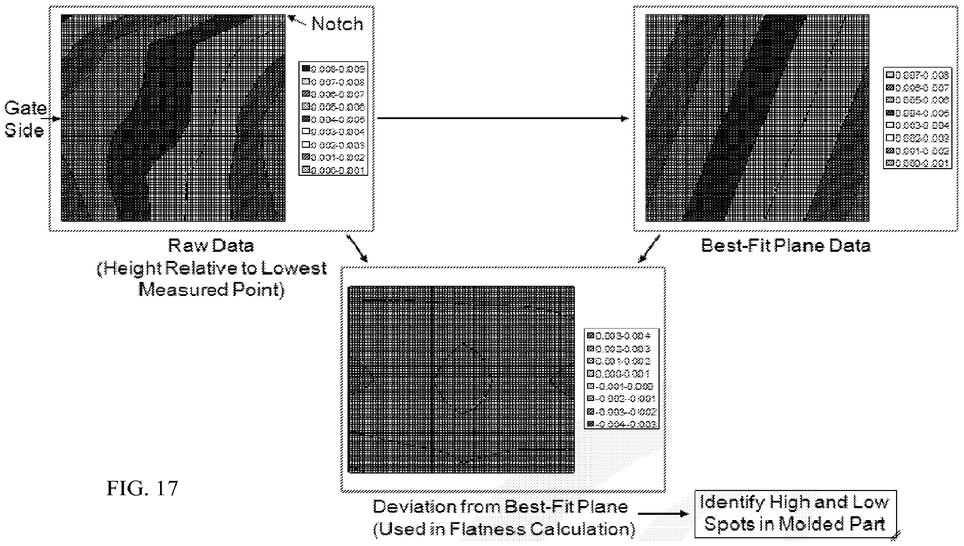

FIG. 17 is a schematic of a flatness measurement of a stack tray as illustrated in FIG. 16 with the raw data (height relative to lowest measure point) being measured, a best-fit plane data is applied to eliminate tilt to arrive at the deviation from best-fit plane that is used in the flatness calculation;

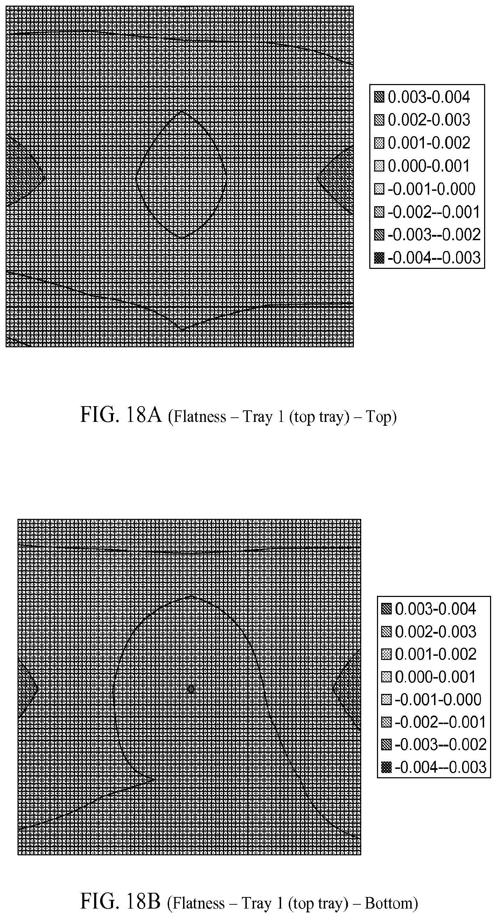

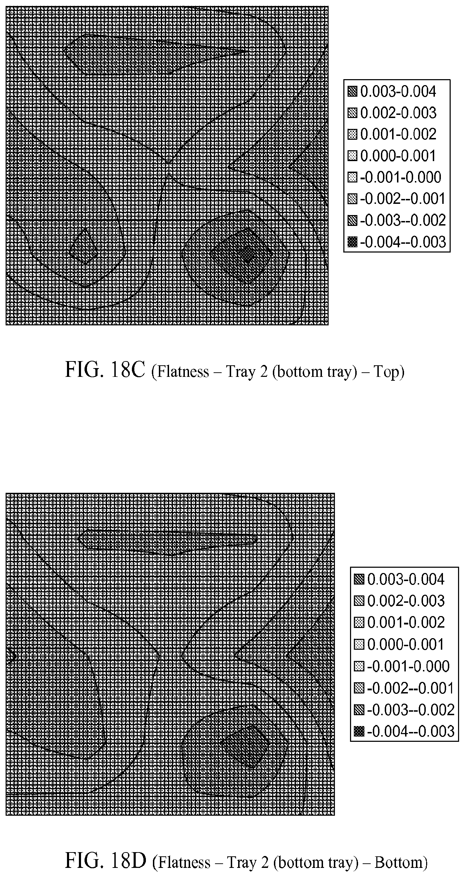

FIG. 18A is a schematic of the deviation from best-fit plane for the top of a first stack tray that is stacked ontop of a second stack tray (such as shown in FIG. 15A); FIG. 18B is a schematic of the deviation from best-fit plane for the bottom of the first stack tray that is stacked ontop of a second stack tray; FIG. 18C is a schematic of the deviation from best-fit plane for the top of a second stack tray that has the first stack tray stacked on top thereof; FIG. 18D is a schematic of the deviation from best-fit plane for the bottom of a second stack tray that has the first stack tray stacked on top thereof;

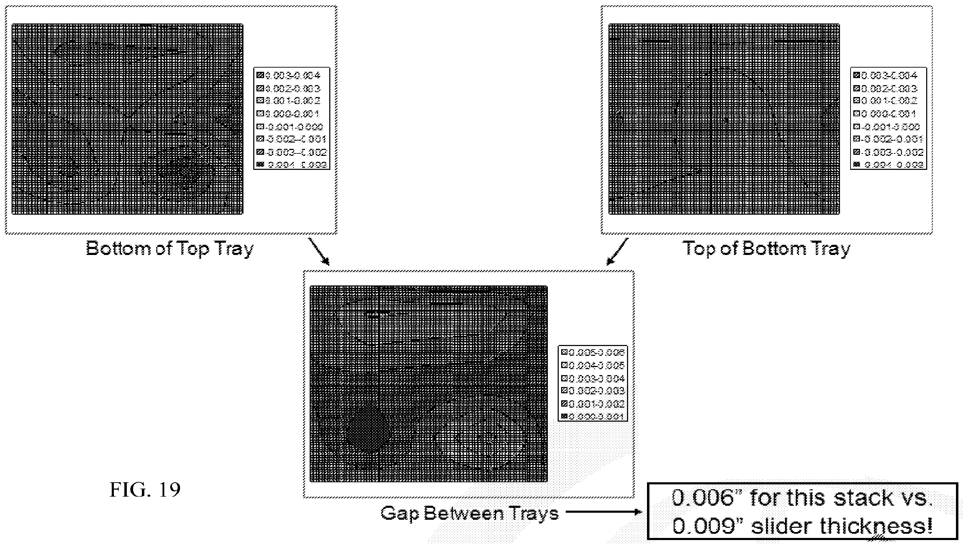

FIG. 19 is a schematic of the measurement of the gap between the first and second trays of FIGS. 18A-18D illustrating the schematic of the deviation from best-fit plane for the bottom of the first top stack tray and the schematic of the deviation from best-fit plane for the top of the second bottom stack tray and the resulting gap between the trays, which results in about 0.006" that is less than the slider thickness 0.009" that are inserted and carried within the stack trays indicating that the sliders would not fit or slip out between the gap between the trays;

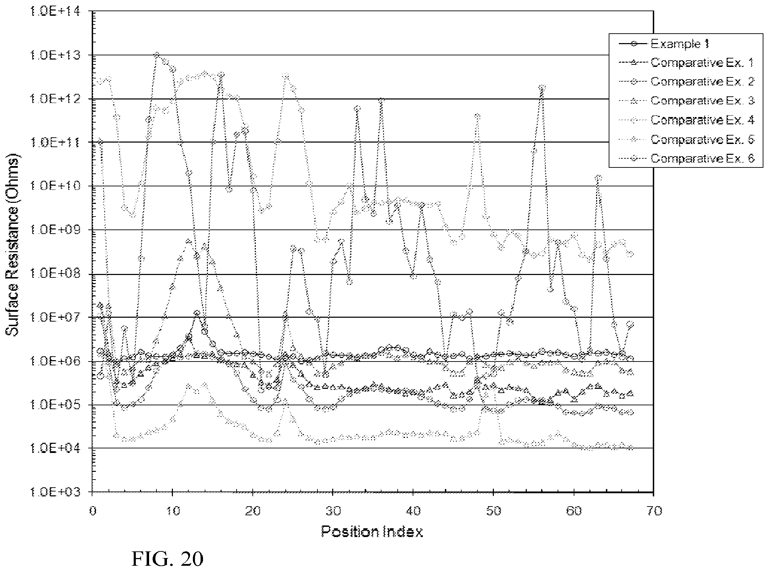

FIG. 20 is a graph of surface resistance testing data using a Pro-Stat PRS-801 resistance system with two-point probe measuring the 67 locations identified in FIG. 7A with the discs composed of compositions of Example 1 (PEEK, about 35 wt-% of finely milled carbon fibers with an aspect ratio greater than 1 and less than about 5, and about 1.25 wt-% MWNTs), Comparative Example 1 (PEEK and about 5% SWNTs), Comparative Example 2 (PEEK and about 5% MWNTs), Comparative Example 3 (PEEK and about 4% SWNTs), Comparative Example 4 (PEEK and about 15% carbon powder), Comparative Example 5 (PEEK and about 18% carbon powder) and Comparative Example 6 (PEEK and about 20% of carbon fiber having an aspect ratio of about 20), with the testing data indicating the disc comprised of the composition of Example 1 contains a tighter distribution with a reproducible, uniform surface resistance across the entire disc and a small departure at location 13, which is located opposite the gate;

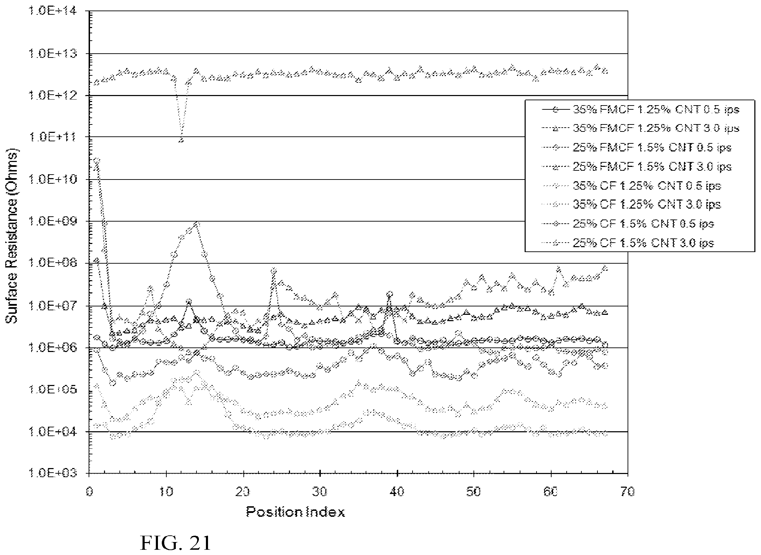

FIG. 21 is a graph of surface resistance testing data using a Pro-Stat PRS-801 resistance system with two-point probe measuring the 67 locations identified in FIG. 7A with the discs composed of the identified compositions (FMCF referring to finely milled carbon fiber having an aspect ratio greater than 1 and less than about 5, and CF referring to carbon fibers having an aspect ratio of about 20), the compositions molded into articles at various injection speeds ("ips"), with the testing data indicating the compositions according to embodiments of the present invention are less process sensitive than other polymer composites using other carbon fillers.

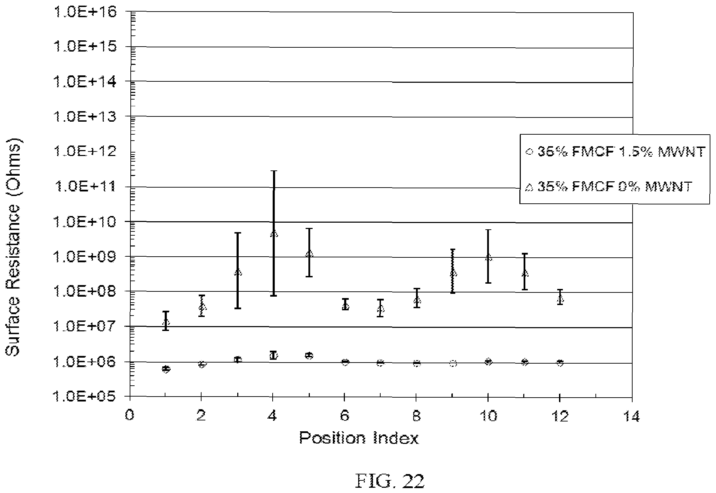

FIG. 22 is a graph of surface resistance testing data using a Pro-Stat PRS-801 resistance system with two-point probe measuring the 12 locations identified in FIG. 6A with the discs composed of the identified compositions (FMCF referring to finely milled carbon fiber having an aspect ratio greater than 1 and less than about 5), the compositions molded into articles at injection speeds of 0.5, with the testing data further indicating the advantages of the compositions containing carbon nanotubes, such that the compositions have a consistent or stable surface resistance.

### DETAILED DESCRIPTION OF THE DRAWINGS

In some embodiments the sample may have been extruded more than once by the process used to make the composition, and in some embodiments extruded less than five times by the process used to make the composition. In some embodiments, compositions of the present invention are contemplated to be substantially invariant to an increase in the storage modulus and or to a decrease in resistivity of the composition with further extrusion cycles. The G' would be substantially invariant to an increase in the storage modulus and or decrease in resistivity because no improvement in the dispersion with more extrusion process cycles or time is expected to be observed. Without wishing to be bound by theory, further extrusion processing of the composite reduces G' because the dispersion may deteriorate because for example the nanotubes are undergoing aggregation. Embodiments of the composite material of polymer, nanotubes and finely milled carbon fibers have reached the maxima for the storage modulus and with further induction of stress, the dispersion declines. As would be known to one skilled in the art, the shear modulus can also be referred to as the storage modulus (or also shear storage modulus G' or elastic modulus).

Embodiments of the present invention include nanotubes, for example some versions include SWNTs, MWNTs, or nanotubes comprising SWNTs and/or MWNTs, distributed in a melt of thermoplastic that forms an electrically conductive or viscoelastic material from the melt on solidification. In the case of SWNTs and/or MWNTs, the ropes or tubes form a network or matrix in the continuous phase of the polymer; this contrasts with individual polymer coated nanotubes prepared by suspending individual nanotubes in a solvent and associating them with a linear polymer.

In some embodiments of the present invention, a composition comprises a thermoplastic polymer, the polymer is not a foam or an elastomer, and the thermoplastic polymer includes a network of nanotubes and finely milled carbon fibers dispersed in the thermoplastic polymer. In some embodiments the amount of nanotubes is between about 0.5% and about 5% by weight and the amount of finely milled carbon fibers having an aspect ratio greater than 1 and less than about 5 is between about 20% and about 50% by weight. In some embodiments, the composition does not comprise added carbon powders and/or carbon fibers having an aspect ratio greater than about 5.

In some embodiments, nanotubes have an aspect ratio of 100 or more. In some embodiments the L/D can be 1000 or more with diameters of 1-3.5 nm or 4 nm (roping) and lengths of 1000 nm or more. The composition is made by a melt mixing, for example an extrusion process and advantageously is free of solvents used to disperse nanotubes or to dissolve the polymer. Under reduced pressure conditions, the composition outgasses less than 0.38 parts per billion (v/v) of a solvent vapor where the solvent is one that can dissolve the polymer or that was used in forming the nanotube dispersion. The outgassing of composites of the present invention and those made by solvent casting or other similar methods can also be determined by this method or the methods disclosed by Zabka et al in U.S. Pat. Application Publication No.: 20030066780, filed Oct. 4, 2001 and published Apr. 10, 2003.

In some embodiments of the compositions of the present invention, aqueous leachable anions from the sample can be about 40 ppb or less and aqueous leachable cations from the sample can be about 160 ppb or less, and acid leachable metals from the sample can be about 4800 ppb or less.

Advantageously the nanotubes in the composition are not polymer wrapped SWNTs. This reduces the costs of such compositions and allows the metallic, semimetallic, semi conductive, or any combination of such SWNTs, MWNTs or other nanotubes with the finely milled carbon fibers to form an electrically percolating network in the composition that may be tunable to a desired surface resistivity that is dependent upon the amount of nanotubes and the amount of finely milled carbon fibers dispersed in the polymer. In some embodiments of the present invention, the compositions or articles have an electrical resistivity of less than about 10¹³ ohm/sq; some compositions or articles have a resistivity of less than about 10¹¹ ohm/sq; some compositions or articles have a resistivity of less than about 10⁹ ohm/sq; some compositions or articles have a resistivity of less than about 10⁷ ohm/sq; and other embodiments of compositions or articles are contemplated to have an electrical resistivity of less than about 10⁵ ohm/sq. In some embodiments, the electrical resistivity of the compositions or articles may be tunable by varying the amount of the nanotubes and/or the amount of the finely dispersed carbon fibers in the polymer.

Electrical percolation threshold for a sample is sufficient proximity of conductive fibers, conductive particles, ropes of two or more conductive nanotubes, individual conductive nanotubes, or any combination of these to form an electrically conductive pathway through the continuous polymer matrix of the composition. For example, for composites with nanotubes and finely milled carbon fibers the percolation threshold may be where a sufficient number of ropes of nanotubes or nanotubes or carbon fibers or a combination thereof are within a distance for charge carriers in the sample to move in response to an applied electric field. In some embodiment the distance between some portion of adjacent tubes or ropes or finely milled carbon fibers can be about 5 nm or less.

The composition can be formed into various articles for fluid handling, a carrier for various substrates like wafers, reticle masks, and finished goods like computer chips and disk drive and other similar types of read heads, a housing or body or components for various devices such as membrane filters, valves, or flow controllers.

Embodiments of compositions in the present invention can be formed into stock pieces and articles having a thickness much greater than cast films while retaining the network structure of the nanotubes and finely milled carbon fibers in the polymer as characterized by the storage modulus value and storage modulus slope with frequency. While there are no limitations on the thickness of compositions or portions of structures of articles including compositions in embodiments of the present invention, in some embodiments the composition or article can have a smallest dimension or a thickness of greater than about 1 mm, in some embodiments greater than about 10 mm, and in other embodiments greater than 10 cm or more. Thicker compositions and articles can be used for structural applications such as partitions, laboratory blast shields, laboratory hood windows, tubing, filter housing manifolds, valve body blocks, wafer and reticle carrier supports. These thick materials are more difficult to form directly by film casting or which may require additional processing steps such as hot pressing cast film pieces together to form thicker pieces.

Nanotubes are an example of nanometer or molecular size materials that may be used as a constituent in the compositions in embodiments of the present invention. These nanotubes may be doped with conductive atoms; in some cases the dopants may be inside the tube or the dopants may be supplied with functionalized surfaces. Examples of nanotubes are single-walled carbon nanotubes (SWNTs), multiwalled carbon nanotubes (MWNTs), or tungsten disulfide nanotubes. In some embodiments, the composition comprises nanotubes that are SWNTs or ropes of them dispersed in the polymer which are not functionalized or oxidized. In some embodiments, the composition consists essentially of nanotubes that are SWNTs or ropes of them dispersed in the polymer. In some embodiments, the composition consists of nanotubes that are SWNTs or ropes of them dispersed in the polymer. In some embodiments, the SWNTs may comprise other nanotubes, for example MWNTs, or other conductive particles such as carbon. In some compositions, the nanotubes can be used without further purification. In other embodiments, the nanotubes may be purified to remove deleterious metals and catalyst that could be extracted in some applications of molded articles of the invention. In some embodiments the SWNTs are not oxidized and are absent surface functional groups.

Nanotubes in embodiments of the present invention can refer to both individual tubes, aggregates of tubes also referred to as ropes, or a combination of these. The extrusion compounding of the nanotubes can disperse aggregates of nanotubes into smaller aggregates, into individual tubes, or it can form a mixture of individual tubes and ropes. The aggregated nanotubes and individual tubes can be distributed or dispersed in the continuous phase of the polymer matrix.

In some embodiments, the amount of the nanotubes in the polymer according to compositions of the present invention can be less than about 5% by weight, in some embodiments about 4% or less by weight, in some embodiments about 3% or less by weight, and in still some other embodiments less than about 2% by weight. In some embodiments of the invention the amount of nanotubes in the polymer may range from about 0.5% to about 5% by weight, in some embodiments about 0.75% to about 4% by weight, in some embodiments about 1% to about 3% by weight, and in still other embodiments about 1.25% to about 2.5% by weight. The nanotubes are at least partially deagglomerated or dispersed in a network compared to their initial state such as before extrusion compounding.

In some embodiments, the finely milled carbon fibers are initially provided as carbon fibers having an aspect ratio greater than about 10, such as about 20, and then undergo a process to modify or otherwise change the aspect ratio until the aspect ratio is greater than 1 and less than about 5, in some embodiments between about 1.5 and about 5, and in still other embodiments between about 2 and about 4. In some embodiments, in order to modify the aspect ratio, the carbon fibers are milled, pulverized, ground, chopped, broken under shear force, or the like. It should be understood herein, that the term "finely milled carbon fibers" refers to the resulting carbon fibers having a reduced length and/or diameter such that the aspect ratio (length/diameter), irrespective of the process used to modify them, has an aspect ratio greater than 1 and less than about 5, in some embodiments between about 1.5 and about 5, and in still other embodiments between about 2 and about 4. In some embodiments, before undergoing the modification process, the carbon fibers are about 5 microns to about 20 microns in diameter and about 50 microns to about 25,000 microns in length with longer lengths contemplated, and the resulting finely milled carbon fibers have an aspect ratio greater than 1 and less than about 5, in some embodiments an aspect ratio between about 1.5 and about 5, and in still other embodiments an aspect ratio between about 2 and about 4. In some embodiments, before undergoing the modification process, the carbon fibers are about 6 microns to about 18 microns in diameter and about 110 microns to about 2,500 microns in length with longer lengths contemplated, and the resulting finely milled carbon fibers have an aspect ratio greater than 1 and less than about 5, in some embodiments an aspect ratio between about 1.5 and about 5, and in still other embodiments between an aspect ratio about 2 and about 4. In some embodiments, after undergoing the modification process, the carbon fibers have an average diameter between about 5 microns and about 12 microns and an average length between about 10 microns and about 40 microns.

In some embodiments, the carbon fibers as initially provided are finely milled carbon fibers having an aspect ratio greater than 1 and less than about 5, in some embodiments between about 1.5 and about 5, and in still other embodiments between about 2 and about 4, wherein the initially provided carbon fibers do not need to undergo any processing to modify or change the length and/or diameter of the carbon fibers. It should be understood herein, that the term "finely milled carbon fibers" thus also refers to the carbon fibers having an initial or original length and diameter such that the aspect ratio (length/diameter) is greater than 1 and less than about 5, in some embodiments between about 1.5 and about 5, and in still other embodiments between about 2 and about 4. In some embodiments, the carbon fibers have an average diameter between about 5 microns and about 12 microns and an average length between about 10 microns and about 40 microns and an aspect ratio greater than 1 and less than about 5. In some embodiments, the carbon fibers have an average diameter between about 6 microns and about 10 microns and an average length between about 10 microns and about 30 microns and an aspect ratio greater than 1 and less than about 5.

In some embodiments, the finely milled carbon tubes in the polymer can be greater than about 20% by weight, in some embodiments greater than about 25% by weight, in some embodiments greater than about 30% by weight, in some embodiments greater than about 35% by weight, in some embodiments greater than about 40% by weight, in some embodiments greater than about 45% by weight, and in still some other embodiments less than about 50% by weight. In some embodiments of the present invention, the amount of the finely milled carbon fibers in the polymer can be between about 20% to about 50% by weight, in some embodiments about 25% to about 45% by weight, in some embodiments about 30% to about 40% by weight, and in still other embodiments about 33% to about 38% by weight. In some embodiments, the finely milled carbon fibers are not agglomerated in their initial state, such as before extrusion compounding.

A greater dispersion provides a denser network of the nanotubes in the continuous phase which imparts improved flame retardancy to the composition or molded article, the article exhibits less dripping of polymer and has a greater normal load when exposed to a flame, and also provides reduced electrical resistivity at lower nanotube loading which reduces costs.

In some embodiments, the nanotubes are neat without added chemical functionalization on the ends and or sides of the tubes. In other embodiments, it is contemplated that the nanotubes may be chemically functionalized to aid in their extrusion compounding, dispersion, or distribution in the polymer matrix. The nanotubes may in some embodiments comprise a mixture of functionalized and un-functionalized nanotubes. In some embodiments the nanotubes do not include or are free from functional groups, groups formed by nanotube oxidation, and in particular organic functional groups, linked or bonded to carbon atoms of the nanotubes. This reduces the costs of the nanotubes and compositions made from them in embodiments of the invention.

Nanotubes, as ropes, tubes, or a combination of these can be used in the compositions in various embodiments of the present invention. The term nanotube can refer to any of these, ropes, tubes, or their combination unless a specific form is mentioned. For example, SWNTs refer to ropes, tubes, or a combination of these while "SWNT tubes" refers only to separated nanotubes. Nanotubes as ropes or individual tube can be characterized by their aspect ratio (length/diameter). As shown in FIGS. 1A and 1B the SWNTs or ropes of them can have lengths of several tens of nanometers to several hundred nanometers. Nanotubes with length of several microns may be used. The diameters can be about 1 nanometer for SWNT tubes and larger for ropes of tubes. High aspect ratio materials can be used; in some embodiments the aspect greater than about 25, in other embodiments greater than about 100, and in still other embodiments greater than about 250. A higher aspect ratio of the nanotubes may be advantageous because less nanotube material would need to be used. Carbon nanotube or nanotubes according to the present invention can separately be single-wall carbon nanotubes (SWNTs), multi-wall carbon nanotubes (MWNTs), double-wall carbon nanotubes, buckytubes, carbon fibrils, and combinations thereof. Such carbon nanotubes can be made by any known technique, and they can be optionally purified, preferably without oxidation. Such carbon nanotubes can be metallic, semiconducting, semimetallic, and combinations thereof.

Because of their small size, carbon nanotubes will tend to agglomerate when dispersed in a polymeric resin. To achieve good rheological and or electrical properties in a composite, uniform dispersion of the nanotubes or ropes of them within the polymer matrix is beneficial. The better the uniformity of the dispersion of nanotubes in the continuous phase, the lower the slope of the storage modulus. Further, the better the uniformity, the lower the mass or weight percent of nanotubes that can be used to achieve a given storage modulus or electrical conductivity. Lower loadings can be used to reduce material costs.

Agglomeration can occur in single walled carbon nanotubes because entanglement of the tubes can occur during nanotube growth. Embodiments of compositions and methods for making them are able to overcome such aggregation with these and other forms of nanotubes or single walled carbon nanotubes and achieve compositions above the rheological and or electrical percolation threshold at low nanotube loadings, about 5 wt % or less. Optionally deagglomeration of the nanotubes can be performed by sonication, coating, chemical treatment, or other known methods prior to extrusion compounding the components.

Some embodiments of the invention use nanotubes that consist, consist essentially of, or comprise SWNTs. SWNTs and methods for making them for various embodiment of the present invention include those disclosed in U.S. Patent Application Publication U.S. 2002/0046872 and U.S. Pat. No. 6,936,233. Suitable raw material nanotubes are known. The term "nanotube" has its conventional meaning as described; see R. Saito, G. Dresselhaus, M. S. Dresselhaus, "Physical Properties of Carbon Nanotubes," Imperial College Press, London U.K. 1998, or A. Zettl "Non-Carbon Nanotubes" Advanced Materials, 8, p. 443 (1996). Nanotubes useful in this invention can include, e.g., straight and bent multi-wall nanotubes, straight and bent single wall nanotubes, and various compositions of these nanotube forms and common by-products contained in nanotube preparations. Nanotubes of different aspect ratios, i.e. length-to-diameter ratios, will also be useful in this invention, as well as nanotubes of various chemical compositions, including but not limited to dopants. Commercially available SWNTs can be obtained from Unidym (Sunnyvale, CA); embodiments of the invention can disperse various grades of nanotubes such as Bucky ESD34 or XD. Carbon nanotubes are also commercially available from CarboLex, Inc. (Lexington, Ky.) in various forms and purities, Hyperion Cambridge, Mass., from Dynamic Enterprises Limited (Berkshire, England) in various forms and purities, and Southwest Nanotechnologies (Norman, OK).

Nanotubes in some embodiments may comprise multi-walled carbon nanotubes (MWNTs), which are commercially available and methods of making MWNTs are known.

Nanotubes in some embodiments may comprise tungsten disulfide, boron nitride, SiC, and other materials capable of forming nanotubes. Methods of making nanotubes of different compositions are known. (See "Large Scale Purification of Single Wall Carbon Nanotubes: Process, Product and Characterization," A. G. Rinzler, et. al., Applied Physics A, 67, p. 29 (1998); "Surface Diffusion Growth and Stability Mechanism of BNk Nanotubes produced by Laser Beam Heating Under Superhigh Pressures," O. A. Louchev, Applied Physics Letters, 71, p. 3522 (1997); "Boron Nitride Nanotube Growth Defects and Their Annealing-Out Under Electron Irradiation," D. Goldberg, et. al, Chemical Physics Letters, 279, p. 191, (1997); Preparation of beta-SiC Nanorods with and Without Amorphous SiO₂ Wrapping Layers, G. W. Meng et. al., Journal of Materials Research, 13, p. 2533 (1998); U.S. Pat. Nos. 5,560,898, 5,695,734, 5,753,088, 5,773,834.

An improved method of producing single-wall nanotubes is described in U.S. Pat. No. 6,183,714, entitled "Method of Making Ropes of Single-Wall Carbon Nanotubes,". This method uses, inter alia, laser vaporization of a graphite substrate doped with transition metal atoms, preferably nickel, cobalt, or a mixture thereof, to produce single-wall carbon nanotubes in yields of at least 50% of the condensed carbon. The single-wall nanotubes produced by this method are much more pure than those produced by the arc-discharge method. Because of the absence of impurities in the product, the aggregation of the nanotubes is not inhibited by the presence of impurities and the nanotubes produced tend to be found in clusters, termed "ropes," of 10 to 5000 individual single-wall carbon nanotubes in parallel alignment, held together by van der Waals forces in a closely packed triangular lattice.

PCT/US/98/04513 entitled "Carbon Fibers Formed From Single-Wall Carbon Nanotubes" discloses, inter alia, methods for cutting and separating nanotube ropes and manipulating them chemically by derivatization to form devices and articles of manufacture comprising nanotubes. Other methods of chemical derivatization of the side-walls of the carbon nanotubes are disclosed in PCT/US99/21366 entitled "Chemical Derivatization of Single Wall Carbon Nanotubes to. Facilitate Solvation Thereof, and Use of Derivatized Nanotubes,".

Optionally the nanotubes can be purified. For contaminant sensitive fluid or substrate contacting applications in semiconductor or pharmaceutical applications, impurities such as but not limited to extractable metals or particulate can be removed from the nanotubes prior to extrusion compounding with a polymer. Examples of contaminants that can be removed include but are not limited to nanotube catalyst support, pyrolytic carbon, catalyst and others. Metals analysis of nanotube polymer composites in embodiments of the invention can be determined by acid digestion of the sample, for example by heating with nitric acid with subsequent analysis by ICP-MS. Graphitic flakes, polyhedral particles, amorphous carbon, or other undesirable particle forming material can be removed from the nanotubes especially where shear history becomes measurable.

In embodiments of the invention, the polymer used to form the continuous phase is a polymer that disperses nanotubes and finely milled carbon fibers with extrusion compounding. Polymers that can be used as the continuous phase in extrusion compounded nanotube compositions of the present invention can include high temperature, high strength polymer. These polymers have high resistance to heat and chemicals. The polymer is preferably resistant to the chemical solvent N-methylpyrrolidone acetone, hexanone, and other aggressive polar solvents especially at room temperature, in some cases below about 50° C., or in some cases below about 100° C. A high temperature, high strength polymer is one that has a glass transition temperature and/or melting point higher than about 150° C. Further, the high strength, high temperature polymer preferably has a stiffness of at least 2 GPa.

Examples of high temperature, high strength polymers for extrusion compounded compositions of the present invention are independently polyphenylene oxide, ionomer resin, nylon 6 resin, nylon 6,6 resin, aromatic polyamide resin, polycarbonate, polyacetal, polyphenylene sulfide (PPS), trimethylpentene resin (TMPR), polyetheretherketone (PEEK), polyetherketone (PEK), polysulfone (PSF), tetrafluoroethylene/per-fluoroalkoxyethylene copolymer (PFA), polyethersulfone (PES; also referred to as polyarylsulfone (PASF)), high-temperature amorphous resin (HTA), polyetherimide (PEI), liquid crystal polymer (LCP), polyvinylidene fluoride (PVDF), ethylene/tetrafluoroethylene copolymer (ETFE), tetrafluoroethylene/hexafluoropropylene copolymer (FEP), tetrafluoroethylene/hexafluoropropylene/perfluoroalkoxyethylene terpolymer (EPE), and the like. Mixtures, blends, and copolymers that include the polymers described herein may also be used. In some embodiments the high strength, high temperature polymers are PEK, PEEK, PES, PEI, PSF, PASF, PFA, FEP, HTA, LCP and the like. Examples of high temperature, high strength polymers are also given in, for example, U.S. Pat. Nos. 5,240,753; 4,757,126; 4,816,556; 5,767,198, and patent applications EP 1 178 082 and PCT/US99/24295 (WO 00/34381). In some embodiments the blend may include about 60 to about 80% of PEEK. In some embodiments the blend may include PEI and PEEK, and in still further embodiments a blend of about 10 to about 20% PEI and about 70 to about 80% PEEK with the nanotubes making up the balance.

In some versions the polymers used to extrusion disperse the nanotubes are high temperature, high strength thermoplastic polymers; the polymers are not thermoset or solution cast polymers. Examples of high temperature, high strength thermoplastic polymers that can be used in versions of the invention are independently polyetheretherketone (PEEK®), Polyetherketoneketone (PEKK), polyetherketone (PEK), poly ether imide (PEI), polyimide (PI), perfluoro polymers like Teflon® FEP (copolymer of tetrafluoroethylene with Hexafluoropropylene), PFA (a copolymer of tetrafluoroethylene and perfluoro-propylvinylether), MFA (a copolymer of TFE and perfluoro-methylvinylether), Polybutylene terephthalate (PBT), or co-polymers including these. In some embodiments the polymer can be a flame or fire retardant material including but not limited to polycarbonate, polyesters, polyphosphonates, polyphenylene sulfide (PPS), polysulfone (PSF), polyethersulfone (PES), UPE, or blends of these or copolymers including these. In other versions, polymers may include rigid rod polymers. Examples of useful rigid rod polymer can include but are not limited to PARMAX and blends of PARMAX with PEEK, PI, or PEI.

In some embodiments the polymer forming the continuous phase comprises PEEK, PI, or PEI. In other embodiments the continuous phase comprises PEEK or PEI. In still other embodiments the polymer comprises PEEK.

In some embodiments, the polymer that is extrusion compounded with the nanotubes and finely milled carbon fibers is not solution castable or soluble in a solvent. For example, neither the nanotubes nor the finely milled carbon fibers are suspended in a solvent with dissolved polymer and cast into a film that is subsequently extruded. In some embodiment, the nanotubes and/or the finely milled carobon fibers are dispersed in a thermoplastic, for example a master batch with a high concentration of nanotubes and/or finely milled carbon fibers in the polymer, where the polymer is characterized by not being solution castable. As used herein, "foam" refers to an article or composition that includes a polymer matrix in which the density of the article is less than the density of the polymer matrix alone. Embodiments of the present invention include those whose density and/or viscosity is about that of the polymer, the composition being free of a cellular structure that would reduce its density to that of a foam.

Embodiments of compositions and articles of the present invention can be characterized in that below the melting or glass transition temperature, the compositions and articles resist elongation or deformation under an externally applied force and that above a threshold force the elongation or deformation of the composition remains after the external force is released or removed. Embodiments of the invention include those materials which are not elastically compressible or elastically extensible.

The nanotubes and finely milled carbon fibers dispersed in the polymer have a structure, distribution, orientation or form a network with the polymer. In some embodiments, the nanotubes and finely milled carbon fibers in the polymer have an isotropic orientation. The network resists deformation under a thermal cycling test as illustrated in FIG. 4 compared to Comparative Example 1 comprising about 20% carbon fibers having an aspect ratio of about 20.

The polymer melt with dispersed nanotubes and finely milled carbon fibers in embodiments of the present invention is free of solvent, especially when compared to solvent casting, coagulation, interfacial polymerization, monomer-SWNT copolymerization methods. Embodiments of the present invention do not outgas solvent vapor as would be expected from polymers dissolved in solvents that have been used to cast disperse nanotube or SWNTs into a polymer. Outgassing may be determined by thermal gravimetric analysis, pressure decay, and or TG-MS under atmospheric pressure, reduced atmospheric pressure, or other predetermined application condition. Outgassing can be an important property of articles comprising or consisting of the polymer and dispersed nanotubes and finely milled carbon fibers especially in applications where low levels of contamination are beneficial. Examples of articles prepared by molding nanotubes and finely milled carbon fibers dispersed in polymers in embodiments of the present invention can include substrate carriers (reticle or wafer), tubing, valves, and other fluid contacting structures. Deleterious outgassing may include water vapor or organic solvents at levels of parts per million or less, parts per billion or less, or parts per trillion. Other vapors can include those detrimental to materials and processes used in semiconductor and pharmaceutical applications.

A method of making compositions and dispersions of nanotubes and finely milled carbon fibers in polymers in embodiments of the present invention include the steps or acts of dispersing nanotubes and/or finely milled carbon fibers in a continuous polymer matrix. In some embodiments the method can comprise the steps or acts of extrusion compounding an amount of nanotubes and an amount of finely milled carbon fibers with a polymer to form a composition. The extrusion compounding in embodiments of the present invention distributes the nanotubes and finely milled carbon fibers in the polymer such that the composition are contemplated to have a storage modulus G' that is substantially invariant with further extrusion compounding of the composition.

Another embodiment of the invention is a method of producing an article or stock pieces or pellets of a composite composition in embodiments of the invention. The method may comprise transferring the composite composition of polymer and network of nanotubes and finely milled carbon fibers in embodiments of the present invention as a powder, pellets, or in stock billets to a location for selling molded articles of the composition. At this location for selling the composite composition, the composition may be molded into articles at the location for selling molded articles of the composition. The method may further comprise the act of heat treating molded articles. The method may further include the act or steps of assembling final products comprising articles molded from the composite composition of the present invention with other articles comprising materials that are not composite compositions of the present invention. In some embodiments the composite, articles made from the composite, stock pieces, pellets, or the like can have a surface resistivity uniformity within a factor of 100 and in some within a factor of 10 for two or more measurement test points on the sample, an article comprising the composition, a stock piece or the like. Molded articles may include but are not limited to portions or all of reticle carriers as illustrated in U.S. Pat. Nos. 6,513,654 and 6,216,873; disk shippers as illustrated in U.S. Pat. Nos. 4,557,382 and 5,253,755; chip trays as illustrated in U.S. Pat. No. 6,857,524; wafer carriers as illustrated in U.S. Pat. No. 6,848,578; fluid housings as illustrated in U.S. Pat. No. 6,533,933. Articles comprising the composite composition in embodiments of the present invention may be used in processes for making semiconductor wafers; they may be used in delivering, transporting, or purifying liquid reagents for semiconductor or pharmaceutical manufacturing; the compositions of the present invention and articles made from them can be used in process tools that include but are limited to flow meters and flow controllers, valves, tubing, heat exchange devices, filter housings, and fluid fittings for connecting to tubing.

The dispersion of nanotubes and finely milled carbon fibers in a melted polymer made by extruding dry polymer, nanotubes and finely milled carbon fibers together, in some embodiments occurs essentially simultaneously. In some embodiments, the finely milled carbon fibers may be compound extruded in the polymer prior to the nanotubes being dispersed therein. In some embodiments, the nanotubes are compound extruded in the polymer prior to the finely milled carbon fibers being dispered therein. For electrically conductive nanotubes, this process can result in composite compositions whose electrical dissipative properties and storage modulus do not substantially change with repeated melt extrusion of the nanotube-polymer dispersion through an extruder as illustrated in FIG. 11A. For electrically conductive nanotubes, this process can be used to prepare electrically dissipative materials whose resistivity can be varied depending upon the amounts of the nanotubes and the amounts of the finely milled carbon fibers dispersed in the polymer.

When a polymer is mixed with immiscible nanotubes, the polymer is the continuous phase and the nanotubes are the dispersed phase. Where the nanotubes and/or finely milled carbon fibers are considered single molecules, the nanotubes and/or finely milled carbon fibers may be referred to as being distributed in the polymer. A combination of dispersed and distributed nanotubes and/or finely milled carbon fibers in the continuous phase can also exist. The nanotubes can form a discrete phase in the continuous matrix. In embodiments of the invention, the nanotubes can exist as individual tube or the tubes may be agglomerated together to form ropes of tubes. The extrusion compounding can distribute, disperse, or any combination of these, the nanotubes in the continuous polymer phase. The extrusion compounding can distribute, disperse, or any combintion of these, the finely milled carbon fibers in the continuous polymer phase. The extrusion compounding can reduce the size of the agglomerated tubes in ropes of nanotubes and cause dispersive, distributive, or a combination of these types of mixing of the nanotubes in the continuous phase polymer matrix. The extrusion compounding can also reduce the size of the carbon fibers and cause dispersive, distributive, or a combination of these types of mixing of the finely milled carbon fibers in the continuous phase polymer matrix.

In some embodiments, the carbon fibers may be added to the continuous polymer phase with shear force applied by an extruder to process the carbon fibers to have an aspect ratio greater than 1 and less than about 5 during a compound extrusion process. In some embodiments of the process, SWNTs or other nanotubes to be extrusion compounded with the polymer can optionally be deagglomerated by such acts such as sonication, ultrasonicating, electrostatic treatment, ball milling, or electric field manipulation. In some embodiments of the process, the SWNTs or other nanotubes can also include optional dispersion additives or have surface functionalization.

Extrusion compounding of the polymer and composition comprising nanotubes and finely milled carbon fibers can occur in an approximately contemporaneous manner as illustrated in FIG. 10A and FIG. 10B. The polymer and composition comprising the nanotubes and finely milled carbon fibers are compounded at about the same time with a sufficient amount of nanotubes and finely milled carbon fibers and enough energy (torque applied to the screws), heat, and time (residence time) to form an extrusion compounded composition. The composition having nanotubes and finely milled carbon fibers distributed and/or dispersed in the polymer is contemplated to have a storage modulus G' that is substantially invariant with further extrusion compounding of the composition.

The amount of nanotubes by weight, the amount of finely milled carbon fibers by weight, and polymer by weight can be varied to obtain compositions and molded articles having a desired set of properties and cost. For example, higher amounts of electrically conductive nanotubes and/or finely milled carbon fibers can be used to obtain materials with lower electrical resistivity, with lower amounts of finely milled carbon fibers used to reduce material costs. Higher amounts of nanotubes may also be used to obtain higher storage modulus for a given polymer or combination of polymers.

In some embodiments, adding nanotubes. finely milled carbon fibers, and polymer together at the same time in the extruder, melting together and extruding to compound the polymer and nanotubes, gives better dissipative properties through improved dispersion of the nanotubes and finely milled carbon fibers. This can be better than adding SWNTs or other nanotubes to a melted polymer and then compounding. This is shown for example by side stuffing as illustrated in FIG. 11B, which can result in clumps of SWNTs in the polymer rather than a dispersion. As discussed in U.S. Patent Publication 2010/0267883, it is now known that once the SWNTs have been dispersed in the polymer, repeated extrusion (see for example FIG. 11A) does not improve the dispersion or dissipative properties of the composition or articles made from them, in some embodiments repeated extrusion decreases the storage modulus to a plateau or steady state value as shown in FIG. 20*b* of the patent publication.

In embodiments of the invention, the nanotubes and finely milled carbon fibers are mechanically dispersed with a thermoplastic; the thermoplastic can be in the form of a powder, pellet, film, fiber, or other form, to form an extruded composite.

Dispersion can occur using a twin screw extruder that includes kneading, shearing, and mixing sections. For example, about 220 to about 320 newton-meters of torque can be the energy supplied to the screws which can have a length of about 95 cm and an L/D of about 38 to about 42; other values for these parameters can be used provided they result in the polymer composites of the present invention with a storage modulus that does not increase with further extrusion compounding. The extruder can have one or more temperature zones. The first temperature zone can be a temperature that results in melting of the polymer and dispersion of the nanotubes and/or finely milled carbon fibers in the polymer. Additional heating zones can be located downstream from the initial zone, which may alternatively correspond to the location of the finely milled carbon fibers being later added and dispersed in the polymer already containing the nanotubes. Alternatively a temperature gradient can be formed along the extruder. The amount of energy and sections of the screw can be chosen to provide a dispersion of nanotubes and finely milled carbon fibers and form a composition whose storage modulus does not increase with repeated extrusion of the material and whose value indicates that the nanotubes are dispersed. The essentially constant or non-increasing value of G' with further compounding indicates that the polymer matrix is not degraded by the energy input to disperse and or distribute the nanotubes and/or finely milled carbon fibers into the polymer matrix. Extrusion compounding of the nanotube and finely milled carbon fibers with the continuous phase thermoplastic or polymer matrix in the melt overcomes attractive force between the ropes, tubes, or aggregates of nanotubes and disperses or distributes the nanotubes and finely milled carbon fibers in the matrix.

The method can further include the act of molding the extrusion compounded composition of polymer, nanotubes and finely milled carbon fibers to form various articles. The articles can be solid, tape, tube, membrane, or other shaped form determined by the mold or die. The molded article can be flame resistant, electrically dissipative, electrically insulating, or any combination of these. Molding acts with the extrusion compounded compositions can include but are not limited to blow molding, rotational molding, compression molding, injection molding, extrusion, or other molding methods.

Polymers that can be used to form flame retardant and fire resistant materials, which can optionally be electrically dissipative, can include PEEK, Polyimide (Aurum), PEI (Ultem) and mixture of these with PEEK since they are miscible with PEEK. In some embodiments, the thermoplastic may comprise a branched polyphosphonate that is self-extinguishing in that they immediately stop burning when removed from a flame. Any drops produced by melting these branched polyphosphonates in a flame instantly stops burning and do not propagate fire to any surrounding materials. Moreover, these branched polyphosphonates do not evolve any noticeable smoke when a flame is applied. Accordingly, these branched polyphosphonates can be used as additives in commodity or engineering plastics to significantly improve fire resistance without severely degrading their other properties, such as toughness or processing characteristics. The thermoplastic may independently include polycarbonate, polyphosphonate, and other polyesters useful for flame retardant materials. These plastics may include but are not limited to those disclosed in U.S. Pat. No. 6,861,499; U.S. Pat. No. 5,216,113; U.S. Pat. No. 4,350,793; and U.S. Pat. No. 4,331,614.

Optionally conventional additives which include, for example, thickening agents, pigments, dyes, stabilizers, impact modifiers, plasticizers, or antioxidants and the like can be added to the compositions of the present invention.

### Example 1

Multi-walled carbon nanotubes (MWNTs) were used as received without modification or purification. The MWNTs exist mainly as individuals of different sizes. Carbon fibers having a diameter of about 7 microns and a length of about 150 microns with an aspect ratio greater than 20 from supplier were pulverized until the aspect ratio was greater than 1 and less than about 5. Feed rates of the MWNTs and finely milled carbon fibers were shear mixed with a thermoplastic PEEK, at about 355° C in a corotating, intermeshing twin screw extruder (length 95 cm, L/D 38-42) to obtain concentrations of about 1.25 wt-% of MWNTs and 35 wt-% finely milled carbon fibers in PEEK. Compounding was carried out using multiple heating zones with barrel temperatures ranging from about 350° C to about 370° C. Torque from about 260 to about 360 newton-meters was applied to the twin screw. The polymer, MWNTs and finely milled carbon fibers were mixed by the screw of the extruder. No additives or dispersing agents were used. Bulk density of composites were about 1.40 g/cm³. Extruded samples were prepared using 4 strand die with 3 mm orifices, a feed rate between about 14-20 kg/hr.

This example illustrates the dispersion of the MWNTs and finely milled carbon fibers in the polymer results in uniform resistance in samples or articles made. Pro-Stat PRS-801 Resistance System Two-Point Probe were used. The resistance was measured to 2 significant figures at between 12 positions and 96 positions as illustrated in FIGS. 5-7B. Multiple samples tested and each sample was tested multiple times. The uniformity of the surface resistivity of composite materials in embodiments of the invention and articles made therefrom can be determined using the standard ANSI/ESD STM11.13 the contents of which are incorporated herein by reference in their entirety.

The results of Example 1 compared to Comparative Examples A, B and C, as illustrated in FIGS. 5-7 and FIGS. 21-22, show that the articles comprised of the composition of the present invention have a surface resistivity uniformity within a factor of 100 and in some cases within a factor of 10 for two or more resistance measurement test points on the test article, in some aspects three or more, in some aspects between two to about 96 points, and in some aspects across the surface of the article. This illustrates the improved distribution of the MWNTs and finely milled carbon fibers in the polymer in such compositions. Embodiments of the present invention provide materials having substantially uniform surface resistivity across a sample, in some embodiments the substantial uniform surface resistivity of any point on the surface of a sample of the composite of nanotubes and finely milled carbon fibers dispersed in the polymer. This is advantageous in electrostatic discharge applications of the composites in articles such as chip trays, reticle and wafer carriers, shippers, test sockets and the like.

## Claims

1. A composition comprising a polymer melt, an amount of carbon nanotubes, and an amount of carbon fibers extrusion compounded together in the composition, wherein the carbon fibers have an aspect ratio greater than 1 and less than 5, and wherein the amount of carbon nanotubes and the amount of carbon fibers are dispersed in the polymer melt.

2. The composition of claim 1, wherein the polymer melt comprises polyetherimide (PEI), polyimide (PI), poly ether sulfone (PES), poly phenyl sulfone (PPS), per fluoroalkoxy (PFA), fluorinated ethylene propylene (FEP), ethylene tri fluoro ethylene (ETFE), poly sulfone, polystyrene, poly ether ketone (PEK), poly ether ketone ketone (PEKK), polybutylene terephthalate (PBT), polyolefms (PO), polyethylene terephthalate (PET), styrene block co-polymers, styrene-butadiene rubber, nylon in the form of polyether block polyamide (PEBA), polyetheretherketone (PEEK), poly(vinylidenefluroide), poly(tetraflurorethylene) (PTFE), polyethylene, polypropylene, poly(vinylchloride) (PVC), ethyl vinyl acetate, liquid crystal polymer (LCP), a blend thereof, copolymers thereof, or a combination thereof.

3. The composition of claim 1 or 2, wherein the amount of carbon nanotubes is between 0.5% and 5% by weight.

4. The composition of any of claims 1-3, wherein the amount of carbon fibers is between 20% and 50% by weight.

5. A composition comprising:
a thermoplastic polymer;
a network of nanotubes dispersed in the thermoplastic polymer; and
a network of carbon fibers having an aspect ratio greater than 1 and less than about 5 dispersed in the thermoplastic polymer;
wherein an amount of the nanotubes in the composition is greater than 0.0 wt-% and less than 5.0 wt-% and an amount of the carbon fibers is greater than 20 wt-%.

6. The composition of claim 5, wherein the nanotubes have an aspect ratio of 100 or more.

7. The composition of claim 5, wherein the nanotubes are not polymer wrapped nanotubes.

8. The composition of claim 5, wherein the composition does not comprise added carbon powders.

9. A method of forming a composite, the method comprising
providing a polymer melt within an extruder;
injecting an amount of nanotubes within the extruder having the polymer melt;
injecting an amount of carbon fibers having an aspect ratio greater than 1 and less than 5 within the extruder having the polymer melt; and
applying shear to blend the nanotubes, the carbon fibers, and the polymer.

10. The method of claim 9, wherein the amount of carbon fibers is between 25% and 45% by weight.

11. The method of claim 9 or 10, wherein the amount of nanotubes is between 0.5% and 5% by weight.

12. The method of claim 9, wherein the composite is fed from the extruder to a shaping apparatus where the composite is formed into an article having a desired shape and size.

13. The method of claim 9, wherein the extruder comprises a twin-screw extruder.

14. An article formed from the composition of any of claims 1-8.

15. The article of claim 14 that has an average surface resistivity of less than 10⁹ ohms/sq.

16. The article of claim 14 or 15, wherein the article is an article comprising a wafer carrier suitable for transporting semi-conductor wafers.

## Patentansprüche

1. Zusammensetzung, umfassend eine Polymerschmelze, eine Menge an Kohlenstoff-Nanoröhrchen und eine Menge an Kohlenstofffasern, die in der Zusammensetzung zusammen extrusionscompoundiert sind, wobei die Kohlenstofffasern ein Aspektverhältnis aufweisen, welches größer als 1 und geringer als 5 ist, und wobei die Menge an Kohlenstoff-Nanoröhrchen und die Menge an Kohlenstofffasern in der Polymerschmelze verteilt sind.

2. Zusammensetzung nach Anspruch 1, wobei die Polymerschmelze umfasst: Poletherimid (PEI), Polyimid (PI), Polyethersulfon (PES), Polyphenylsulfon (PPS), Perfluoralkoxy (PFA), fluoriertes Ethylen-Propylen (FEP), Ethylen-Trifluorethylen (ETFE), Polysulfon, Polystyrol, Polyetherketon (PEK), Polyetherketonketon (PEKK), Polybutylenterephthalat (PBT), Polyolefine (PO), Polyethylenterephthalat (PET), Styrol-Blockcopolymere, Styrol-Butadien-Kautschuk, Nylon in der Form von Polyether-Blockpolyamid (PEBA), Polyetheretherketon (PEEK), Poly(vinylidenfluorid), Poly(tetraflurorethylen) (PTFE), Polyethylen, Polypropylen, Poly(vinylchlorid) (PVC), Ethylvinylacetat, Flüssigkristallpolymer (LCP), eine Mischung davon, Copolymere davon oder eine Kombination davon.

3. Zusammensetzung nach Anspruch 1 oder 2, wobei die Menge an Kohlenstoff-Nanoröhrchen zwischen 0,5 Gew.-% und 5 Gew.-% beträgt.

4. Zusammensetzung nach einem der Ansprüche 1 bis 3, wobei die Menge an Kohlenstofffasern zwischen 20 Gew.-% und 50 Gew.-% beträgt.

5. Zusammensetzung, umfassend:
ein thermoplastisches Polymer,
ein im thermoplastischen Polymer verteiltes Netzwerk von Nanoröhrchen und
ein im thermoplastischen Polymer verteiltes Netzwerk von Kohlenstofffasern mit einem Aspektverhältnis, welches größer als 1 und geringer als etwa 5 ist,
wobei die Menge an Nanoröhrchen in der Zusammensetzung größer als 0,0 Gew.-% und
geringer als 5,0 Gew.-% ist und die Menge an Kohlenstofffasern größer als 20 Gew.-% ist.

6. Zusammensetzung nach Anspruch 5, wobei die Nanoröhrchen ein Aspektverhältnis von 100 oder mehr aufweisen.

7. Zusammensetzung nach Anspruch 5, wobei die Nanoröhrchen keine Polymer-umwickelten Nanoröhrchen sind.

8. Zusammensetzung nach Anspruch 5, wobei die Zusammensetzung keine zugesetzten Kohlenstoffpulver umfasst.

9. Verfahren zur Herstellung eines Komposits, das Verfahren umfassend:
Bereitstellen einer Polymerschmelze in einem Extruder,
Einspritzen einer Menge an Nanoröhrchen innerhalb des Extruders mit der Polymerschmelze,
Einspritzen einer Menge an Kohlenstofffasern mit einem Aspektverhältnis von größer als 1 und weniger als 5 innerhalb des Extruders mit der Polymerschmelze und
Anwenden einer Scherkraft, um die Nanoröhrchen, die Kohlenstofffasern und das Polymer zu vermischen.

10. Verfahren nach Anspruch 9, wobei die Menge an Kohlenstofffasern zwischen 25 Gew.-% und 45 Gew.-% beträgt.

11. Verfahren nach Anspruch 9 oder 10, wobei die Menge an Nanoröhrchen zwischen 0,5 Gew.-% und 5 Gew.-% beträgt.

12. Verfahren nach Anspruch 9, wobei das Komposit vom Extruder zu einer formgebenden Vorrichtung geführt wird, wo das Komposit zu einem Produkt mit einer gewünschten Form und Größe geformt wird.

13. Verfahren nach Anspruch 9, wobei der Extruder einen Doppelschrauben-Extruder umfasst.

14. Produkt, welches aus der Zusammensetzung nach einem der Ansprüche 1 bis 8 gebildet ist.

15. Produkt nach Anspruch 14, welches einen durchschnittlichen Oberflächenwiderstand von weniger als 10⁹ Ohm/cm² hat.

16. Produkt nach Anspruch 14 oder 15, wobei das Produkt ein Produkt ist, welches einen Waferträger umfasst, der zum Transport von Halbleiter-Wafern geeignet ist.

## Revendications

1. Composition comprenant un polymère fondu, une quantité de nanotubes de carbone et une quantité de fibres de carbone mélangés par extrusion ensemble dans la composition, lesdites fibres de carbone présentant un rapport de forme supérieur à 1 et inférieur à 5, et ladite quantité de nanotubes de carbone et ladite quantité de fibres de carbone étant dispersées dans le polymère fondu.

2. Composition selon la revendication 1, ledit polymère fondu comprenant un polyétherimide (PEI), un polyimide (PI), une polyéthersulfone (PES), une polyphénylsulfone (PPS), un perfluoroalcoxy (PFA), un éthylène propylène fluoré (FEP), un éthylène trifluoroéthylène (ETFE), une polysulfone, le polystyrène, la polyéther cétone (PEK), la polyéther cétone cétone (PEKK), le téréphtalate de polybutylène (PBT), des polyoléfines (PO), le téréphtalate de polyéthylène (PET), des copolymères séquencés de styrène, un caoutchouc styrène-butadiène, un nylon sous la forme d'un polyamide séquencé de polyéther (PEBA), la polyétheréthercétone (PEEK), le polyfluorure de vinylidène, le polytétrafluoroéthylène (PTFE), le polyéthylène, le polypropylène, le polychlorure de vinyle (PVC), l'acétate d'éthyle et de vinyle, un polymère à cristaux liquides (LCP), un mélange de ceux-ci, des copolymères de ceux-ci ou une combinaison de ceux-ci.

3. Composition selon la revendication 1 ou 2, ladite quantité de nanotubes de carbone étant comprise entre 0,5 % et 5 % en poids.

4. Composition selon l'une quelconque des revendications 1 à 3, ladite quantité de fibres de carbone étant comprise entre 20 % et 50 % en poids.

5. Composition comprenant :
un polymère thermoplastique ;
un réseau de nanotubes dispersés dans le polymère thermoplastique ; et
un réseau de fibres de carbone présentant un rapport de forme supérieur à 1 et inférieur à environ 5 dispersé dans le polymère thermoplastique ;
ladite quantité des nanotubes dans la composition étant supérieure à 0,0 % en poids et inférieure à 5,0 % en poids et la quantité de fibres de carbone étant supérieure à 20 % en poids.

6. Composition selon la revendication 5, lesdits nanotubes présentant un rapport de forme supérieur ou égal à 100.

7. Composition selon la revendication 5, lesdits nanotubes n'étant pas des nanotubes enveloppés de polymère.

8. Composition selon la revendication 5, ladite composition ne comprenant pas de poudres de carbone ajoutées.

9. Procédé de formation d'un composite, le procédé comprenant
la production d'un polymère fondu au sein d'une extrudeuse ;
l'injection d'une quantité de nanotubes au sein de l'extrudeuse contenant le polymère fondu ;
l'injection d'une quantité de fibres de carbone présentant un rapport de forme supérieur à 1 et inférieur à 5 au sein de l'extrudeuse contenant le polymère fondu, et
l'application d'un cisaillement pour mélanger les nanotubes, les fibres de carbone et le polymère.

10. Procédé selon la revendication 9, ladite quantité de fibres de carbone étant comprise entre 25 % et 45 % en poids.

11. Procédé selon la revendication 9 ou 10, ladite quantité de nanotubes étant comprise entre 0,5 % et 5 % en poids.

12. Procédé selon la revendication 9, ledit composite étant alimenté de l'extrudeuse vers un appareil de mise en forme où le composite est formé en un article ayant une forme et une taille souhaitées.

13. Procédé selon la revendication 9, ladite extrudeuse comprenant une extrudeuse à double vis.

14. Article formé à partir de la composition selon l'une quelconque des revendications 1 à 8.

15. Article selon la revendication14 qui présente une résistivité superficielle moyenne inférieure à 10⁹ ohms/sq.

16. Article selon la revendication 14 ou 15, ledit article étant un article comprenant un support de plaquettes approprié pour transporter des plaquettes semi-conductrices.
